(19) Europäisches Patentamt
European Patent Office
Office européen des brevets

(11) **EP 1 484 365 B1**

(12) **EUROPEAN PATENT SPECIFICATION**

(45) Date of publication and mention
of the grant of the patent:
**29.04.2020 Bulletin 2020/18**

(21) Application number: **02705198.6**

(22) Date of filing: **14.03.2002**

(51) Int Cl.:
*C09C 3/06* (2006.01)     *C09D 201/00* (2006.01)
*C09C 1/00* (2006.01)     *C09C 1/64* (2006.01)
*C09D 5/36* (2006.01)     *C08K 3/08* (2006.01)
*C08K 9/02* (2006.01)     *C09D 7/62* (2018.01)

(86) International application number:
**PCT/JP2002/002434**

(87) International publication number:
**WO 2003/076526 (18.09.2003 Gazette 2003/38)**

(54) **COATED POWDER, COATING COMPOSITION AND COATED ARTICLE**

BELEGTES PULVER, BESCHICHTUNGSZUSAMMENSETZUNG SOWIE BESCHICHTETER GEGENSTAND

POUDRE ENROBEE, COMPOSITION DE REVETEMENT ET ARTICLES REVETUS

(84) Designated Contracting States:
**AT BE CH CY DE DK ES FI FR GB GR IE IT LI LU MC NL PT SE TR**

(43) Date of publication of application:
**08.12.2004 Bulletin 2004/50**

(73) Proprietors:
• **NITTETSU MINING CO., LTD.**
  **Tokyo 100-8377 (JP)**
• **Nakatsuka, Katsuto**
  **Sendai-shi, Miyagi 982-0252 (JP)**

(72) Inventors:
• **ATARASHI, Takafumi**
  **Nishitama-gun, Tokyo 190-0182 (JP)**
• **HOSHINO, Kiyoshi**
  **Nishitama-gun, Tokyo 190-0182 (JP)**
• **ITO, Takahiro**
  **Nishitama-gun, Tokyo 190-0182 (JP)**
• **KISHIMOTO, Akira**
  **Nishitama-gun, Tokyo 190-0182 (JP)**
• **OGURA, Shinichi**
  **Nishitama-gun, Tokyo 190-0182 (JP)**
• **NAKATSUKA, Katsuto**
  **Sendai-shi, Miyagi 982-0252 (JP)**

(74) Representative: **Grünecker Patent- und Rechtsanwälte PartG mbB**
**Leopoldstraße 4**
**80802 München (DE)**

(56) References cited:
EP-A1- 0 852 977     EP-A2- 0 874 026
WO-A1-96/28269     WO-A1-98/07791
JP-A- 2000 273 352     JP-A- 2001 271 006
JP-A- 2001 271 006     JP-A- 2002 080 749
JP-A- 2002 080 749

**Description**

FIELD OF THE INVENTION

The present invention relates to film-coated powders, coating compositions and coated materials, precisely to powders having vivid and beautiful colors, to coating compositions for automobiles, general articles, color paints, color ink, toners and the like that show color shifts (color changes depending on viewing angles), and to their coated materials.

The invention also relates to multi-layer film-coated powders and their production method, in particular, to multi-layer film-coated magnetic powders with coating control of the light interference multi-layer film on the surface of the substrate particles thereof and usable for color toners, color inks, coating compositions, cosmetic pigments and others, and to a method for producing them.

BACKGROUND ART

It is known to coat the surface of powder with a film of some other substance to thereby improve or diversify the properties of the powder, and a demand for obtaining powders with specific properties is increasing. In particular, powders having the properties intrinsic to metal powders or metal compound powders and having some other properties, therefore having composite functions are desired. For producing such powders, coating a base powder with multiple layers of metal oxide films having a uniform thickness is taken into consideration.

We, the present inventors have previously invented a method of forming a metal film on substrate particles to thereby whiten the powder owing to the reflection effect of the film (JP-A 3-271376, 3-274278), and a method of dispersing substrate particles in a metal alkoxide solution to hydrolyze the metal alkoxide, thereby forming a metal oxide film having a uniform thickness of from 0.01 to 20 $\mu$m on the surface of the substrate particles to produce a powder having a metal oxide film of which the metal component differs from the metal of constituting the base (JP-A 6-228604).

In particular, the above-mentioned powder having multiple layers of metal oxide films or metal films may have specific functions given thereto by controlling the thickness of each layer, and, for example, when coating films having a different refractive index are formed on the surface of substrate particles to have a thickness corresponding to the 1/4 wavelength of the incident light applied thereto, then the resulting powders may totally reflect the incident light thereto. When this is applied to magnetic substrate particles, then the resulting powders reflect light to be for white toners . In addition, when the film thickness is so designed that the unit coating layers to constitute the light interference multi-layer films on the surface of the powders may have an interference reflection peak of a specific same wavelength, then it is indicated that the resulting powders could be monochromatic powders even when any dye or pigment is not used therein.

In powdery substrates, however, there exists no theoretical analysis necessary for accurately controlling the light reflection characteristics from multi-layer thin films, and therefore when film thickness planning is effected with no correction thereon, then a case may occur where the refractive index value of the final film-coated substrates may be remote from the intended value owing to the fitting after every layer coating.

Even when a suitably planned film thickness value could be obtained, it is still impossible to monitor the actual film thickness to be the just-planned value in actual film-forming operations of producing multi-layer film-coated powders.

For powdery substrates, when the coating films are so controlled that the maximum or minimum reflection wavelength determined through spectrometry would be a predetermined value on flat substrates, then there occurs a problem in that the finally-obtained multi-layer coated films could not have a desired reflection intensity at a desired wavelength.

Regarding powdery substrates, therefore, multi-layer film-coated powders and their production method are desired, in which the film thickness is so planned that the reflection intensity at a specific wavelength light of each film could be large and the coated powders could have a desired reflection intensity at a desired wavelength as having the planned film thickness.

On the other hand, a new trend in the art is toward pigments that give off beautiful colors owing to light interference action thereon and have an optical effect of color shift to attain color change depending on viewing angles, and therefore give angle-dependent colors and have a luster effect, and there is an increasing demand for the pigments of the type in many industrial fields of, for example, automobile coating, decoration coating, plastic pigment coloring, as well as coating compositions, printing inks and others.

The importance of these pigments is increasing more and more in producing secrete documents for forgery prevention, including, for example, bank notes, checks, check cards, credit cards, revenue stamps, postage stamps, railroad and air tickets, telephone cards, public lottery tickets, gift tickets, passports and identification cards.

For example, printed matters with a printing ink formed by the use of the above-mentioned color shift-effect pigment can be readily and surely differentiated from printed matters with ordinary printing ink, when seen with the naked eye.

In particular, pigments are important that undergo angle-dependent color changes between two or more strong interference colors and therefore have a color shift effect of extremely noticeable color change.

Regarding the conventional technique of their production, luster pigments having a color shift effect are produced through physical vapor deposition (USP Nos. 3, 438, 796 and 5,135, 812), or are produced through vapor-phase decomposition of volatile precursors for coating of small and flat metal materials (CVD, chemical vapor deposition), or are produced through wet chemical coating of small and flat metal materials.

Goniochromatic luster pigments that comprise a base of transparent silicate substrate or coated small and flat iron (III) oxide are described in West German Patent (DE-A) No. 19618569, European Patent (EP-A) 753545, and further former West German Patent Application No. 19808657.1.

On the other hand, titanium dioxide-coated, small and flat silicate-based, new goniochromatic luster pigments are disclosed in German Patent (DE-A) No. 2000-44834 (by BASF AG), which differ from conventional luster pigments in point of the substrate substance thereof and/or the coating mode for them, in that they are heated in a reducing atmosphere and have at least one layer packet that comprises (A) a colorless coating having a refractive index, $n \leq 1.8$ and (B) a colorless coating having a refractive index $n \geq 2.0$.

However, the luster pigments described in DE-A No. 2000-44834 exhibit angle-dependent color change only of from greenish blue to violet, and at present, there is no satisfactory disclosure of pigments capable of undergoing color change to any other vivid color such as red, yellow, etc.

Further, JP 2001/271006 A discloses a multilayered film-coated powder and a method for producing the multilayered film-coated powder where the film thickness of respective coating layers is determined so as to provide a maximum value or a minimum value to the value of the reflection intensity R ($\lambda$) of the multilayered film-coated powder obtained by correcting the multilayered film reflection intensity Rflat in the case of a multilayered film-coated platy material in which the material of the substrate particle, the number of the coating layers, coating order of the respective coating layers, the material of the respective coating layers and a desired reflected light wavelength are selected by the shape and the particle diameter of the substrate particle at the desired wavelength and the production is carried out so as to provide the determined value of the film thickness in the multilayered film-coated powder having at least the two coating layers different in refractive index on the substrate particle and is capable of reflecting light at the specific wavelength and the method for producing the multilayered film-coated powder.

Moreover, EP 0 852 977 A1 shows a powder having metal oxide films on its surface in which the films have a heightened refractive index and which hence shows a high reflectance and has a bright color. A powder is obtained which has a reduced number of metal oxide films on the surface and hence has a small particle diameter. A powder having a multilayered film on the surface which comprises a base particle having on the surface thereof a multilayered film comprising at least a metal oxide film formed by the hydrolysis of a metal alkoxide, and in which the multilayered film has undergone a heat treatment. A process for producing any of the above powders is also described and comprises dispersing a base particle into a solution of a metal alkoxide, hydrolyzing the metal alkoxide to obtain a metal oxide and deposit a film of the metal oxide on the surface of the base particle, conducting the foregoing steps two or more times to form a multilayered film, and performing a heat treatment in at least the final step, and in which the multilayered film is regulated so as to have an appropriate combination of constituent materials and appropriate film thicknesses to change the interference colors of the multilayered film and thus impart a bright color to the powder.

Accordingly, now desired are film-coated powders that have a color shift effect for angle-dependent color change between bright and strong interference colors and have advantageous applicability characteristics capable of broadening the coloration latitude with them; and also desired are coating compositions and coated materials.

We, the present inventors have succeeded in obtaining film-coated powders having increased lightness and color saturation and having a vivid color shift (color change) effect, by increasing the number of the coating films more than conventionally to give at least two-layered or more multilayered coated powders and by specifically so controlling the film planning that the reflectance at the wavelength of the maximum value of the reflection spectrum is enlarged and the wavelength width of the reflection peak having the maximum value is reduced.

In addition, we have presumed that the reasons for the above-mentioned problems would be because, in planning films to be formed on powders, the light incident angle into powders is not constant contrary to that into flat substances, and the in-plane light path length in different coated particles is not constant also contrary to that in flat substances. Given that situation, we have effected specific correction in planning the thickness of the coating films, and, as a result, have succeeded in obtaining multi-layer film-coated powders having the specifically-planned film thickness profile and therefore having a desired reflection intensity at a desired wavelength, and in completing a method for producing them.

DISCLOSURE OF THE INVENTION

The invention is defined by the appended claims.

BRIEF DESCRIPTION OF THE DRAWINGS

Fig. 1 is a graph showing the computed values of the relative reflectance of each coating film obtained according to equations (1) and (2) in Example 10.

Fig. 2 is a graph of a relational curve (dotted line) indicating the actual film thickness ($d_M$) of a film-coated powder for particle size correction of the first layer, $SiO_2$ film, and the optical film thickness (nd) thereof, in Example 10.

Fig. 3 is a graph of a relational curve (dotted line) indicating the actual film thickness ($d_M$) of a film-coated powder for particle size correction of the second layer, $TiO_2$ film, and the optical film thickness (nd) thereof, in Example 10.

Fig. 4 is a graph showing the computed values of the relative reflectance of each coating film obtained according to equations (1) and (2) and through particle size-dependent correction in Example 10.

Fig. 5 is a graph showing the relative reflectance of each coating film of the multi-layer film-coated powder actually produced in Example 10.

Fig. 6 is a graph showing the computed values of the relative reflectance of each coating film obtained with no correction according to formulae (1) and (2), in Comparative Example 1.

Fig. 7 is a graph showing the relative reflectance of each coating film of the multi-layer film-coated, powder actually produced in Comparative Example 1.

BEST MODE FOR CARRYING OUT THE INVENTION

The film-coated powders, the coating compositions and the coated materials of the invention are described in detail hereinunder.

The film-coated powders, the coating compositions and the coated materials of the invention preferably comprises a multi-layer film-coated powder having a coating film on the surface of substrate particles. The spectrophotometric characteristic of the film-coated powder are such that, when the ratio of the length at 400 nm between 380 and 780 nmonmeasuring the reflection spectrum from the vertical reflection light of the film-coated powder (wavelength definition width L) to the height of the reflectance 100 % in the vertical axis (reflectance definition width R), L/R is 5/2, then the ratio of the peak height (H) to the half-value width (W), H/W is at least 1. The film-coated powder of the type gives deep and vivid colors except white.

In film-forming reaction in the film-coated powders, the coating compositions and the coated materials of the invention, deposition of a solid phase not forming a film is prevented according to the operation and the effect mentioned below, whereby a coating film having a uniform thickness and having a desired thickness could be formed on the surface of substrate particles.

<1> A buffer solution is used for the reaction solvent, and the reaction system is kept at a predetermined pH. Accordingly, the influence of acid or alkali on the system could be relieved, and the surface corrosion of the substrate may be prevented.

<2> Ultrasonic dispersion improves not only the dispersibility of the substrate particles, especially the magnetic particles such as magnetite powder, but also the diffusibility of the film-forming component, and, in addition, it prevent the adhesion of films to each other and therefore improves the dispersibility of the film-coated substrate particles.

<3> The film-forming component is deposited at a suitable reaction speed, and deposition of a solid phase not forming a film is prevented.

Owing to the synthetic effect as above, the surface charge of the film-coated powder may be kept constant; and owing to the action of the electric double layer thereof, the film-coated powder does not aggregate and its particles are well dispersed.

For better action of the electric double layer, it is desirable that the pH varies depending on the combination of the substance of the substrate and the type of the metal compound to be formed in the liquid reaction system through the film-forming reaction therein, and is not the same as the electric point of the two.

Though water-soluble materials are used in the invention, the film-coated particles do neither aggregate nor cake up together owing to the above-mentioned effect and mechanism thereof even when magnetic substrates are used. Accordingly, the invention makes it possible to produce film-coated powders that allow preferred film thickness control. In addition, the invention also makes it possible to provide functional powders that maintain the characteristics (e.g., magnetic properties) of the substrate particles at high level.

Further, since water is used as the solvent, its advantage is that the production cost for film formation is low as compared with an alkoxide method.

As mentioned above, the film-coated powders, the coating compositions and the coated materials of the invention are specifically so designed that the number of the coating layers therein is preferably at least two or more and the thickness of each layer is increased based on the technique intrinsic thereto so as to ensure the spectrometric properties in that the reflectance at the peak .in the reflection spectrum is increased and the ratio of the peak height (H) to the half-value width (W), H/W falls within a specific range as above. Accordingly, they give off beautiful colors having a high color saturation, and have a vivid color shift (color change) effect, and as having the advantageous applicability, they make it possible to enlarge the range of coloration possibility.

Regarding the ratio of the peak height (H) to the half-value width (W), H/W, the film-coated powder must keep the spectrometric properties of such that the ratio of the peak height (H) to the half-value width (W), H/W, is at least 1, preferably at least 1.5, more preferably at least 2, when the ratio of the length at 400 nm between 380 and 780 nm on measuring the reflection spectrum from the vertical reflection light of the film-coated powder (wavelength definition width L) to the height of the reflectance 100 % in the vertical axis (reflectance definition width R), L/R is expressed to be 5/2, as so mentioned hereinabove.

If the ratio H/W is less than 1, then the width of the reflected color may be broad, and the film-coated powder will give a pale color and could not give a vivid color.

The coating compositions are useful in the field of industry, for example, for automobile coating, decoration coating, plastic pigment coloring, as well as coating compositions, printing inks and others.

The film-coated powders, the coating compositions and the coated materials of the invention are being more and more important in producing secrete documents for forgery prevention, including, for example, bank notes, checks, check cards, credit cards, revenue stamps, postage stamps, railroad and air tickets, telephone cards, public lottery tickets, gift tickets, passports and identification cards.

These have such excellent functions and, when a magnetic material, a conductive material or a dielectric material is used for their substrate, then they may react on external factors such as electric field or magnetic field and may therefore have some additional function of mobility, rotation, movement, heat generation and the like. For example, when a magnetic material is used for the substrate thereof, then the coated powder may be applicable to pigment for color magnetic toner or color magnetic ink not detracting from the magnetic property thereof.

In case where multiple layers of metal hydroxide or metal oxide films formed through reaction of metal salts or the like form the low-refractivity light-transmissive coating film of the coated layer, when the thickness of each layer of the coating film (this coats the substrate particles and participates in light interference) is specifically controlled, then the coated powder may have a specific function. For example, when alternate coating films having a different refractive index are formed on the surface of substrate particles so as to satisfy the following formula (3), or that is, when a suitable number of such alternate films having a refractive index n and a thickness d that corresponds to integer m-times as large as 1/4 of the wavelength of visible light are formed to have a suitable thickness, then the coated particles may reflect or absorb the light of the specific wavelength λ (utilizing the Fresnel interference reflection).

$$nd = m\lambda/4 \qquad\qquad (3)$$

Utilizing this effect, a coating film that has a thickness and a refractive index to satisfy the formula (3) relative to the wavelength of the intended visible light is formed on the surface of substrate particles, and one or more other coating films having a different refractive index are formed thereon once or alternately twice or more, whereby the particles may be coated with multiple coating films having a reflection peak in the visible wavelength range. The order of forming the films may be determined as follows: When the substrate to be nuclei has a high refractive index, then it is desirable that the first layer has a low refractive index; but in the case contrary to this, it is desirable that the first layer has a high refractive index.

The film thickness is controlled by measuring the optical thickness, which is a product of the refractive index of the film and the film thickness, with a spectrophotometer as a reflected waveform. Concretely, the film thickness of each layer is so designed that the reflected waveform could be finally the necessary waveform. For example, when the peak position of the reflected waveform of each unit film to constitute a multi-layer coating film is made to accurately correspond to a specific wavelength, then monochromatic color powder of blue, green or yellow can be produced even when any dye or pigment is not used.

However, actual substrates must be designed in consideration of the particle size and the shape of the substrate, the phase shift in the interface between the film substance and the substrate particle substance, and the peak shift owing to the wavelength dependency of the refractive index of the substrate. For example, it is desirable that the peak shift owing to the oxide layer on the surface of the substrate particles and the peak shift owing to the wavelength dependency of the refractive index of the substrate are taken into consideration.

When metals, or substrate particles or films having a large attenuation coefficient are used, the reflected light on the metal surface or on the surface of the substance having a large attenuation coefficient may be elliptically polarized to cause a phase shift, and this interference will have some influence on the intergranular phase of the substrate particles and the multi-layer films. Preferably, this is taken into consideration.

Even when the geometrical film thickness is adjusted, the peak position may be still shifted. In particular, the density in cyan coloration will reduce. To prevent it, the influence of phase shift on every film is taken into consideration, and the best combination of films having a different thickness is designed through computer simulation.

In addition, there is another peak shift to be caused by the phase shift owing to the oxide layer on the surface of substrate or by the wavelength dependency of the refractive index of the substrate. To correct it, the optimum condition must be found out through spectrometry in order that the reflection peak could be at the intended wavelength at the number of the final intended films.

The interference of curved films such as those of spherical particles may be the same as that of flat films. Basically, it follows the Fresnel interference principle. Accordingly, the coloration method may be planned in a specific color system. In curved cases, however, the light having entered powdery particles undergoes complicated interference. When the number of the films is small, the interference waveform is almost the same as that on flat films. However, with the increase in the number of the constitutive layers, , the interference inside the multi-layer film will be more complicated. Based on the Fresnel interference, the multi-layer film may also be specifically so designed that the combination of the constitutive layers could be the best through computer simulation of the reflection spectral curve thereof. In particular, when the surface of substrate particles is -coated with a multi-layer film, the influence of the phase shift between the surface of the substrate particles and all the constitutive layers is taken into consideration and the optimum layer combination may be planned through computer simulation. In addition, the peak shift owing to the oxide layer on the surface of the substrate particles and the peak shift owing to the wavelength dependency of the refractive index of the substrate are also taken into consideration. In actual sample production, the planned spectral curve is referred to, and in actual films, the planned data are corrected. Therefore, the optimum condition must be found out through spectrometry while the film thickness is varied so that the reflection peak could be at the intended wavelength at the number of the final intended films.

When metals, or substrate particles or films having a large attenuation coefficient are used, the reflected light on the metal surface or on the surface of the substance having a large attenuation coefficient may be elliptically polarized to cause a phase shift, and this interference will have some influence on the intergranular phase of the substrate particles and the multi-layer films. Therefore, it is extremely complicated to optimize the respective substances and to obtain the intended waveform. For obtaining the optimum interference reflection waveform, the optical data of the substrate particles and the substances to form the constitutive layers of the multi-layer film are determined, and on the basis of them, a combination of the film and its thickness to give the intended waveform must be previously determined through computer simulation, as so mentioned hereinabove.

When amorphous powders are colored, they also undergo interference with the multi-layer film that coats them, and the basis film planning is attained with reference to the condition for the interference multi-layer film for spherical powders. The peak position of the unit layers to constitute the multi-layer film may be controlled by varying the film thickness of the constitute layers. Concretely, the film thickness may be accurately controlled by controlling the material composition, the solid phase deposition rate and the substrate amount in the process of forming the solid phase component such as metal oxide on the surface of the substrate particles to thereby form the coating film thereon, and the coating film thus formed on the substrate particles may have a uniform thickness and may be colored to have a desired color.

As mentioned hereinabove, the optimum condition is found out while the film-forming condition including the film-forming solution and others is varied so that the peak and valley wavelength of the reflection spectrum could be the intended wavelength at the number of the final intended films, and powders having a specific color may be thereby obtained. When the combination of the substances to constitute the multi-layer film and the film thickness of each unit layer are controlled, then the color by the interference of the multi-layer film may be thereby controlled. Accordingly, the powder may be vividly colored in any desired color even when any dye or pigment is not used.

For the maximum color shift, the sharp reflection peak wavelength and the number of peaks must be optimized, for which the thickness control of each layer is optimized. In particular, when reflection peaks outside the visible range appear inside the visible range depending on the viewing angle, or contrary to this, when reflection peaks in the visible range appear depending on the viewing angle, then colors maybe simultaneously changed when the viewing angle varies even only slightly so far as they are sharp reflection peaks, and this is effective.

The color change owing to color shift may be foreseen from the computed data of the peak position at varying incident angles in formula (1) or in combination of formulae (1) and (2) .

In producing the film-coated powder of the invention, the material of the substrate particles, the particle size of the substrate particles, the number of the coating layers, the order of forming the coating layers, the material of each coating layer, and the desired reflected light wavelength must be selected and determined.

In particular, selecting the materials of the substrate particles and the coating layers naturally results in specifically defining the refractive index thereof.

Specifically defining the refractive index of the substrate particles and the coating layers participate in computing the Fresnel reflectance coefficient and the amplitude reflection intensity of the constitutive layers.

The curvature of the substrate particles and the multi-layer film is specifically defined by determining the particle size of the substrate particles. If the curvature could not be defined, then it will be difficult to correct the spectrophotometric characteristic for film monitoring that will be mentioned hereinunder.

Determining the number of the coating layers participates in specifically defining the factor $R_{flat}$ that will be mentioned hereinunder.

The reflection intensity $R_{flat}$ of the multi-layer film of the corresponding multi-layer film-coated flat may be obtained by introducing the material (refractive index) of the previously-selected substrate particles, the number of the coating layers, the coating order of the coating layers, the material (refractive index) of the coating layers and the desired reflected light wavelength into the following recurrence formula (1), and solving the equation:

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$(1)$$

$$2\delta_j = \frac{4\pi}{\lambda}n_j d_j \cos\phi_j$$

wherein $R_{j+1,j}$ indicates the amplitude reflection intensity between the j-th layer from the bottom and the layer just above it;

j indicates an integer of 1 or more (j - 1 = 0 indicates the substrate);

i indicates an imaginary unit;

$r_{j+1,j}$ indicates the Fresnel reflectance coefficient of the interface between the j-th layer from the bottom and the layer just above it;

$R_{j,j-1}$ indicates the amplitude reflection intensity between the (j-1)th layer from the bottom and the layer just above it;

$2\delta_j$ indicates the phase difference at the j-th layer from the bottom,

$\lambda$ indicates the desired reflected light wavelength;

$n_j$ indicates the refractive index of the j-th layer from the bottom;

$d_j$ indicates the thickness of the j-th layer from the bottom;

$\phi j$ indicates the light incident angle into the j-th layer from the bottom.

The method of correcting the multi-layer reflection intensity $R_{flat}$ determined in the manner as above for substrate particles is not specifically defined. Preferably, the value $R_{flat}$ is further applied to the following equation (2) :

$$R(\lambda) = \int_0^{\frac{\pi}{2}} \sin 2\theta \cdot R_{flat}(\lambda,\theta) \cdot d\theta \qquad (2)$$

wherein $\theta$ indicates the incident angle into the outermost layer, and the thickness of each layer of the coating film is so designed that the $R(\lambda)$ value may be the maximum value or the minimum value at a desired wavelength.

Applying the value $R_{flat}$ to the equation (2) means that the angle distribution of the light incident angle into multi-layer film-coated particles is approximated to the distribution of the light incident angle into one coated semi-sphere to thereby correct the solution of the equation (1) .

For obtaining the thickness of each coating layer, computer simulation is efficient.

Next, coating layers are formed on substrate particles so that they may have the thickness defined in the manner as above.

However, in actual film formation to give multi-layer film-coated powders, it is in fact impossible to directly monitor the actual film thickness of the layer being formed so that it could be the just planned value, as so mentioned hereinabove.

Accordingly, monitoring the film thickness in film-forming operation may be attained by measuring the wavelength at which the reflection intensity of the coated substance is the maximum or minimum value with a spectrometer, and the film-forming operation may be finished when the thus-measured data have reached the maximum or minimum reflection wavelength value that corresponds to the intended film thickness.

However, in case where the substrate is powdery particles, then the relation between the measured data of the maximum or minimum reflection wavelength and the film thickness may be out of order owing to the curvature of the coating layers depending on the shape and the size of the particles, and when the coating films are formed in such a manner that the maximum or minimum reflection wavelength measured with a spectrometer may be the desired value, then there may occur a problem in that the finally obtained, multi-layer film coated particles could not have the desired reflection intensity at the desired wavelength.

Accordingly, it will be necessary to correct the curvature of the coating layers depending on the shape and the size of the substrate particles.

The correction method is not specifically defined. Preferably, selected substrate particles are coated with selected multiple coating layers with stepwise varying the thickness of the layers in some types to give a film-coated powder for particle size correction; then the actual film thickness ($d_M$) of each coating layer of the film-coated powder is measured; the film-coated powder is analyzed with a spectrometer to obtain the optical film thickness (nd) of each coating layer of the film-coated powder; the ratio, $nd/nd_M$, of the optical thickness (nd) of each coating layer to the product ($nd_M$) of the actually-measured film thickness of each coating layer of the film-coated powder and the refractive index thereof (n) is computed; and the ratio $nd/nd_M$ is multiplied by $2\delta_j$ in the above-mentioned recurrence formula (1) that gives the multi-layer film reflection intensity, to thereby correct the spectral characteristics of the multi-layer film-coated powder; and the coating layers are formed so as to have the thus-corrected spectral characteristics.

The method of measuring the actual film thickness ($d_M$) of each coating layer of the film-coated powder for particle size correction is not specifically defined. Preferably, the measurement is attained by cutting each particle of the film-coated powder for particle size correction, and analyzing the cut face thereof. Also preferably, the film-coated particles for particle size correction are cut by processing them with focused ion beams (FIB), as their cut face is clear and is favorable for measurement of the actual film thickness ($d_M$) of each coating layer.

In the film-coated powders, the coating compositions and the coated materials of the invention, the substrate particles to be coated with a metal oxide film or the like are not specifically defined. They may inorganic substances including metal, or may be organic substances, or may also be magnetic substances, dielectric substances, conductive substances or insulating substances.

When the substrate is metal, the metal may be any of iron, nickel, chromium, titanium, aluminium and the like. However, when the coated particles are desired to be magnetic, the metal is preferably magnetic such as iron or the like. The metal may be alloy, and when the coatedparticles are desired to be magnetic, ferromagnetic alloys are preferred.

When the substrate of the powder is a metal compound, its typical examples are oxides of the metals mentioned above, including, for example, oxides of iron, nickel, chromium, titanium, aluminium, silicon, as well as calcium, magnesium, barium or the like, and composite oxides thereof. Other metal compounds than metal oxides are metal nitrides, metal carbides, metal sulfides, metal fluorides, metal carbonates, metal phosphates, etc.

Except metal for the substrate particles, usable are compounds of semi-metals or non-metals, especially oxides, carbides and nitrides thereof. In addition, silica, glass beads and others may also be sued.

The other inorganic substances include inorganic hollow particles such as silicon balloons (hollow silicate particles) ; fine carbon hollow balloons Kurekasphere, fused alumina bubbles, aerosil, white carbon, silica fine hollow balloons, calcium carbonate fine hollow balloons, calcium carbonate, pearlite, talc, bentonite; micas such as synthetic mica, white mica; and kaolin.

The organic substances are preferably resin particles. Specific examples of the resin particles are cellulose powder, cellulose acetate powder; and spherical or ground particles of polyamides, epoxy resins, polyesters, melamine resins, polyurethanes, polyvinyl acetate resins, silicon resins, and polymers or copolymers of acrylates, methacrylates, styrene, ethylene, propylene and their derivatives. More preferably, the resin particles are spherical acrylic resin particles obtained through polymerization of acrylic acid or methacrylate.

However, when the resin particles are the substrate particles, then the heating temperature for drying must not be higher than the melting point of the resin.

Regarding the shape of the substrate, the substrate particles may be in any form of spheres, sub-spheres; isotropic bodies such as regular polyhedrons; polyhedrons such as rectangular parallelepipeds, spheroids, rhombohedrons, tabular bodies, acicular bodies (columns, pillars); completely amorphous powders such as ground powders.

Though not specifically defined, the particle size of the substrate is preferably from 0.01 $\mu$m to a few mm.

The specific gravity of the substrate may fall between 0.1 and 10.5, but is preferably from 0.1 to 5.5, more preferably from 0.1 to 2.8, even more preferably from 0.5 to 1.8 when the powder obtained is dispersed in liquid for its use, in view of the flowability and the floatability thereof. If the specific gravity of the substrate is smaller than 0.1 when the powder obtained is dispersed in liquid for its use, then the buoyancy thereof in liquid will be too large and the coating film must be a multi-layer one or must be extremely thick, and it is uneconomical. On the other hand, if it is over 10.5, then the thickness of the film for floating the coated particles will be thick, and it is also uneconomical.

In the invention, the powdery substrate particles are coated with multiple coating layers each having a different refractive index in such a controlled manner that the refractive index and the thickness of the constitutive coating layers are specifically selected, and the thus-coatedpowdersmaybe colored in a specific color owing to the interference color of the layers and may express specific interference reflection peaks outside the visible light range.

On the selected substrate particles, coating layers of selected materials are formed in a selected forming order to give a selected number of the coating layers, in such a manner that the reflection intensity R (λ) of the multi-layer film-coated powder could be the maximum value or the minimum value at a desired wavelength.

The coating layers to be formed are not specifically defined except for the selected material, the selected number of the layers, the selected coating order and the intended film thickness. For example, they may be formed of metal compounds, organic substances, etc.

The metal for metal salts for use in the invention includes iron, nickel, chromium, titanium, zinc, aluminium, cadmium, zirconium, silicon, tin, lead, lithium, indium, neodymium, bismuth, cerium, antimony, as well as calcium, magnesium, barium, etc. Salts of these metals include sulfates, nitrates, hydrochlorides, oxalates, carbonates and carboxylates. In addition, they further include chelate complexes of metals mentioned above. The type of these metal salts may be suitably selected in the invention, depending on the intended properties of the coated particles and the method employed for producing the coated particles.

Basically, the powder of the invention is produced by forming a colorless transparent film on the substrate and laminating thereon multiple layers each having a different refractive index to color it. For it, therefore, the above-mentioned metals and their salts are used. However, when the waveforms of the reflection and absorption spectra could not give the desired color only by the interference coloration, then the following may be used: Sulfates, nitrates, hydrochlorides, oxalates, carbonates or carboxylates of metals such as cobalt, yttrium, sulfur, europium, dysprosium, antimony, samarium, copper, silver, gold, platinum, rhodium, iridium, tungsten, iron, manganese. In addition, chelate complexes of these metals may also be used. The content of the metal of the type in the coating film may be from 10 ppm to 15 %, preferably from 10 ppm to 15 %, more preferably from 50 ppm to 5 %.

If the metal content is too small, then the coloration may be insufficient; but if too large, then the powder may be too much colored to have a dark color. This is inconvenient to the object of the invention that gives light-color powders.

If desired, multiple layers of metal oxides from these metal salts may be formed, and further if desired, other metal oxide films may be formed thereon through hydrolysis of metal alkoxide, or still other layers may be formed thereon in a different film-forming method.

In that manner, a multi-layer film may be formed on the substrate particles, and in addition, the film-forming condition may be specifically so designed that each layer may have a predetermined thickness and the coated particles may therefore have intended properties. Using inexpensive metal salts as the starting material, multi-layer coating films of metal oxides may be formed through simple operation. In particular, expensive metal alkoxides may not be used for the starting material to produce multi-layer film-coated powders, and this is an important advantage of the invention.

In the method of producing the coating composition of the invention that contains the film-coated powder, the process of forming the multi-layer coating film may be directly followed by the process of producing the composition. Apart from it, any other various methods may be employed where the coating layer is formed one by one, or the single layer formation is combined with a process of continuous formation of multiple layers.

The particle size of the film-coated powder of the invention is not specifically defined, and may be suitably determined in accordance with the object of the invention. In general, it preferably falls between 0.1 μm and a few mm, more preferably between 0.1 μm and 30 μm.

The preferred range of the thickness of one layer of the film-coated powder of the invention varies, depending on the film substance and the size of the substrate particles. When the film substance is a substance having a large absorption coefficient, such as a metal or a non-transparent metal oxide or metal sulfide, then the layer thickness is preferably from μm to 0.5 μm when the size of the substrate particles is from 0.1 μm to 1 μm; or from 0.001 μm to 0.7 μm when the size of the substrate particles is from 1 μm to 10 μm; or from 0.001 μm to 1.0 μm when the size of the substrate particles is 10 μm or more.

When the film substance has a small absorption coefficient, such as a transparent oxide, then the layer thickness is preferably from 0.01 μm to 1.5 μm when the size of the substrate particles is from 0.1 μm to 1 μm; or from 0.01 μm to 3.0 μm when the size of the substrate particles is from 1 μm to 10 μm; or from 0.01 μm to 5.0 μm when the size of the substrate particles is 10 μm or more.

The preferred range of the overall thickness of the coating film of the film-coated powder of the invention also varies, depending on the size of the substrate particles . When the size of the substrate particles is from 0.1 μm to 1 μm, then the overall thickness of the coating film is preferably from 0.1 μm to 5 μm; when the former is from 1 μm to 10 μm, then the latter is preferably from 0.1 μm to 8 μm; and when the former is 10 μm or more, then the latter is preferably from 0.1 μm to 20 μm.

In the step of film formation in the process of producing the film-coated powder and the coating composition of the invention, and especially when the film-forming reaction is attained in an aqueous solvent, the aqueous solvent serving as the film-forming reaction solvent is controlled to have a constant pH, and, at the same time, the film-forming reaction is attained under an ultrasonic dispersion condition to thereby form the intended coating film on the surface of the substrate, as so mentioned hereinabove.

In the invention, a buffer may be added to the aqueous solvent to give a buffer solution for constant film-forming reaction therein, or a previously-prepared buffer solution may be used for the reaction. The film materials except the buffer solution are added to the system of film-forming reaction to form the film. If the pH of the reaction system significantly varies when the film materials are added thereto, then it is desirable to add a buffer solution so as to prevent it.

The constant pH as referred to herein means that the pH is within $\pm$ 2 of the predetermined pH, preferably within $\pm$ 1, more preferably within $\pm$ 0.5.

Not specifically defined, various types of buffer solutions may be used herein. It is important that the substrate particles can well disperse in the buffer solution and, in addition, the buffer solution must be selected so as to satisfy the requirements that the film-coated powder with a metal hydroxide or metal oxide deposited on the surface of the substrate may also disperse therein owing to the action of the electric double layer, and further, tight films may be formed in the above-mentioned slow and dropwise addition reaction.

Accordingly, the method for producing the film-coated powder of the invention differs from any conventional methods of neutralization through reaction of metal salt solution, or deposition at isoelectric point, or deposition under heat or through degradation.

Regarding the condition of ultrasonic dispersion, various ultrasonic oscillators may be used. For example, though not specifically defined, the water tank of an ultrasonic washer may be used. However, the condition of ultrasonic dispersion in the invention may vary, depending on the size of the oscillator, the shape and the size of the reactor, the amount and the volume of the reaction solution and the amount of the substrate particles. Therefore, suitable conditions may be selected for each case.

The buffer solution for use in the invention depends on the solid phase component to be deposited. Though not specifically defined, it includes Tris series, boric acid series, glycine series, succinic acid series, lactic acid series, acetic acid series, tartaric acid series, and hydrochloric acid series.

One example of film formation in an aqueous solvent is described concretely hereinunder. This comprises forming an alternate multi-layer film of a high-refractivity metal oxide and a low-refractivity metal oxide. when titanium oxide or zirconium oxide film is formed, substrate particles are dipped n a buffer solution of acetic acid/sodium acetate or the like, and dispersed therein through ultrasonic oscillation. A metal salt of titanium or zirconium, titanium sulfate, zirconium sulfate or the like is used as a starting material, and an aqueous solution of the metal salt is gradually and dropwise added to the reaction system, whereupon the metal hydroxide or metal oxide thus formed may be deposited around the substrate particles. During the dropwise addition reaction, the pH is kept at the pH (5.4) of the buffer solution.

After the reaction, the powder is separated in a mode of solid-liquid separation, then washed and dried, and heat-treated. For drying it, any of vacuum drying or spontaneous drying may be employed. A spray drier or the like device may be used in an inert atmosphere.

When the coating film is of titanium oxide, then the titanium oxide formation may be represented by the following reaction formula:

$$Ti(SO_4)_2 + 2H_2O \rightarrow TiO_2 + 2H_2SO_4$$

The $TiO_2$ content of titanyl sulfate is preferably from 5 g/liter to 180 g/liter, more preferably from 10/liter to 160 g/liter. If the content is less than 5 g/liter, then the film-forming operation will take a lot of time and the, amount of powder to be processed may reduce, and it is uneconomical; and if over 180 g/liter, then the system may be hydrolyzed while the diluted liquid is added thereto and it could not be the film-forming component. Anyhow, the two are unfavorable.

When a film of silicon dioxide or aluminium oxide is to be formed, the titania-coated particles are dipped and dispersed in a buffer solution of KCl/H3PO3 with NaOH added thereto. Then, a metal salt with silicon or aluminium, sodium silicate or aluminium chloride is used as a starting material, and its aqueous solution is gradually and dropwise added to the reaction system, whereupon the formed metal hydroxide or metal oxide is deposited around the substrate particles. During the dropwise addition reaction, the pH is kept at the pH (9.0) of the buffer solution.

After the reaction, the powder is separated in a mode of solid-liquid separation, then washed and dried, and heat-treated. Through this operation, a metal oxide film of two layers each having a different refractive index is formed on the surface of the substrate particles. Repeating this operation gives a powder having a multi-layer metal oxide film formed on the surface thereof.

When the coating film is of silicon dioxide, then the silicon dioxide formation may be represented by the following reaction formula:

$$Na_zSi_xO_{2x+1} + H_2O \rightarrow xSiO_2 + 2Na^+ + 2OH^-$$

The film formation method of forming the metal compound film is described below.

For the film formation, employable is any method of vapor-phase deposition of PVD, CVD or spray drying to thereby directly deposit the film on the surface of the substrate particles.

However, preferred for use in the invention are the metal alkoxide method which we the present inventors have previously proposed as in JP-A 6-228640 and 7-90310 and International Patent Application WO96/28269, and the aqueous system method as in JP-A 11-131102.

In this case, the linear growth rate is kept higher than the solid phase deposition rate and the reaction condition is so controlled that an amorphous uniform film may be formed.

Though not specifically defined, the organic substance is preferably resin. Specific examples of the resin are cellulose, cellulose acetate, polyamides, epoxy resins, polyesters, melamine resins, polyurethanes, polyvinyl acetate resins, silicon resins, and polymers or copolymers of acrylates, methacrylates, styrene, ethylene, propylene and their derivatives.

When the organic film (resin film) is formed, employable are (a) a method of dispersing substrate particles in a liquid phase followed by forming a resin film on the particles through emulsion polymerization thereon (liquid-phase polymerization, and (b) a method of film formation in a vapor phase (CVD, PVD) .

One example of producing the film-coated powder having a multi-layer film formed on substrate particles, which is to be in the coating composition of the invention, is described below.

For example, when the substrate particles are formed of a substance having a high refractive index, then a low-refractivity light-transmitting film is formed thereon, and a high-refractivity particle-forming film is thereon, and further a low-refractivity light-transmitting film is thereon in that order. Thus, these films are alternately formed on the substrate particles. On the other hand, when the substrate particles are formedof a substance having a low refractive index, then a high-refractivity particle-forming film is formed thereon, and a low-refractivity light-transmitting film is thereon, and further a high-refractivity particle-forming film is thereon in that order.

The starting materials to be used in film formation in the invention, especially metal salts for it is concretely described below.

Preferred examples of the materials to be used in forming a high-refractivity film are titanium halides and sulfates for titanium oxide film; zirconium halides, sulfates, carboxylates, oxalates and chelate complexes for zirconium oxide film; cerium halides, sulfates, carboxylates and oxalates for cerium oxide film; bismuth halides, nitrates and carboxylates for bismuth oxide film; and indium halides and sulfates for indium oxide film.

Preferred examples of the materials to be used in forming low-refractivity film are sodium silicate, water glass, silicon halides, and organosilicon compounds such as alkyl silicates and their polymers for silicon oxide film; aluminium halides, sulfates and chelate complexes for aluminium oxide film; and magnesium sulfates and halides for magnesium oxide film.

For forming a titanium oxide film, for example, titanium sulfate may be mixed with titanium chloride. It is effective for forming a rutile-type titanium oxide film having a high refractive index at low temperatures.

The coating reaction temperature may be so controlled that it is favorable to the type of the metal salt, and a more perfect oxide film may be formed in that controlled condition.

If the film-forming reaction (solid phase deposition reaction) on the surface of the substrate in an aqueous solvent is too slow, then the reaction system may be heated to promote the solid phase deposition reaction. However, if the system is heated too much, then the reaction speed will be too rapid and the supersaturated solid phase could not form a film but may be deposited in the aqueous solution to give gel or fine particles, and in such a case, the film thickness would be difficult to control.

After the coating film has been formed, it is subjected to inclined washing with distilled water added thereto, and the washing is repeated to remove the electrolyte. Then, the coated particles are preferably heat-treated for drying, baking or the like to thereby remove water from the solid phase so that the coating film could be an absolute oxide film. The film-coated powder may be heat-treated in a rotary tube furnace to give dispersed particles with preventing them from caking.

For forming a hydroxide film or an oxide film and for heat-treating it, the coated particles maybe heat-treated every time when one layer is formed thereon, or alternatively, they may be finally heat-treated after the intended multi-layer film has been formed thereon.

The heat treatment condition varies depending on the reaction system. The temperature for the above-mentioned heat treatment may fall between 200 and 1300°C, preferably between 400 and 1100°C. If lower than 200°C, then some salts and water may remain; but if higher than 1300°C, then the film may react with the substrate to give a different substance, and the two are both unfavorable. The heat treatment time may fall between 0.1 and 100 hours, preferably between 0.5 and 50 hours.

The coating composition that contains the film-coated powder of the invention may be formulated as (1) specific color inks or paint-like coating compositions (liquids), or (2) specific color toners, and specific color dry ink-like compositions (powders). These are described below.

(1) As the vehicle for specific color inks or paint-like coating compositions (liquids), usable are any known varnishes that are generally used for color prints, color magnetic prints, or color magnetic coating compositions. For example, a liquid polymer or a polymer or monomer dissolved in an organic solvent may be suitably selected and used, depending on the type of the powder, the method of ink application and the use of ink.

The liquid polymer includes dienes such as polypentadiene, polybutadiene; polyethylene glycols, polyamides, polypropylenes, waxes, and their copolymers and modified derivatives.

The polymer to be dissolved in an organic solvent includes olefinic polymers; acrylic resins such as oligoester acrylates; polyesters, polyesters, polyamides, polyisocyanates, amino acid resins, xylene resins, ketone resins, dienic resins, rosin-modified phenolic resins, dienic rubbers, chloroprene resins, waxes, and their modified derivatives and copolymers.

The monomer to be dissolved in an organic solvent includes styrene, ethylene, butadiene, propylene.

The organic solvent includes alcohols such as ethanol, isopropanol, normal propanol; ketones such as acetone; benzene, toluene, xylene, kerosene, benzine hydrocarbons, esters, ethers, and their modified derivatives and copolymers.

(2) The specific color toners, the specific color dry inks and the specific color dry paint-type compositions (powders) may be produced by directly kneading the specific color multi-layer film-coated powder with resin and optionally with a color-toning agent, in a screw-type extruder, a roll mill or a kneader, then pre-grinding the resulting mixture with in a hummer mill or a cutter mill, then grinding it in a jet mill, and classifying it in an elbow jet mill into particles having a necessary particle size. The process gives a powdery cyan colorant composition. In a polymerization mode of emulsion polymerization or suspension polymerization, the specific color multi-layer film-coated powder may be formulated into a powdery specific color coating composition.

Further, the specific color multi-layer film-coated powder may be mixed with additives such as resin and color-toning agent and with a solvent by the use of a colloidmill or a three-roll mill to give liquid, specific color coating compositions such as ink compositions.

The color-toning agent for brightness increase may be a white pigment (vehicle), including, for example, titanium oxide, zinc oxide, tin oxide, silicon oxide, antimony oxide, lead oxide, and their composite oxides; as well as carbonates such as calcium carbonate, magnesium carbonate, barium carbonate; sulfates such as barium sulfate, calcium sulfate; sulfides such as zinc sulfate; composite oxides and composite hydrous oxides prepared by sintering the above-mentioned oxides, carbonates and sulfates.

For control of color saturation and color hue, and especially when used for color reproduction in color mixing for full color expression, the color-toning agent may be a blue pigment (organic dye, pigment), including, for example, lake dyes and lake pigments such as alkali blue lake, peacock lake, peacock lake blue; oil dyes and pigments such as oil blue; alcohol dyes such as alcohol blue; phthalocyanine pigments such as phthalocyanine, copper phthalocyanine; oxide/sulfide composite pigments such as ultramarine (inorganic pigment); copper-based ultramarine prussian blue pigments such as iron blue, milori blue; cobalt oxide-based composite oxide blue pigments such as cobalt blue, cerulean blue; blue organic dyes and pigments, and blue inorganic pigments, for example, lake dyes and lake pigments such as alkali blue lake; phthalocyanine dyes and pigments such as metal-free phthalocyanine, copper phthalocyanine. The color-toning agent may also be a green pigment, including inorganic pigments, for example, chromium oxides and hydrous oxides such as chromium green, zinc green, chromium oxide, chromium hydrate (viridian) ; copper oxides such as emerald green; cobalt oxides such as cobalt green; as well as organic pigments and dyes, for example, nitroso pigments such as pigment green, naphthol green; azo pigments such as green gold; phthalocyanine pigments such as phthalocyanine green, polychrome-copper phthalocyanine; lakes such as malachite green, acid green lake; oil dyes and pigments such as oil green; alcohol dyes and pigments such as alcohol blue. However, the invention should not be limited to only these.

In addition, when toning with blue, yellow, reddish violet or the like pigment or dye is needed for more delicate color tone control, then the pigment is preferably added to give the optimum specific color.

When the powdery specific color coating composition is produced according to the above-mentioned grinding method (a), the resin to be used includes, not specifically defined, polyamides, epoxy resins, polyesters, melamine resins, polyurethanes, polyvinyl acetate resins, silicon resins, and polymers or copolymers of acrylates, methacrylates, styrene, ethylene, propylene and their derivatives.

When it is produced according to the polymerization method (b), the polymerization may be started from one or more of esters, urethanes, vinyl acetate, organosilicon compound, acrylic acid, methacrylic acid, styrene, ethylene, butadiene, propylene and the like to give their polymers or copolymers.

The coating composition that contains the film-coated powder of the invention takes a form of (1) specific color inks or paint-like compositions (liquids) and (2) specific color toners or specific color dry ink-like compositions (powders), as so mentioned hereinabove.

The liquids includes specific color inks and paints, in which the color-toning agent and the slowly-drying resin may be combined with a solidification promoter, a tackifier for viscosity increase, a flowability improver for viscosity reduction, and a dispersant for dispersion of particles.

On the other hands, when the powders are produced according to the grinding method (a), then the color-toning agent and the slowly-drying resin may be combined with a solidification promoter, a flowability improver for viscosity reduction in kneading, a dispersant for dispersion of particles, a charge controlling-agent for fixation on paper, wax, etc.

When produced according to the polymerizationmethod (b), the composition may contain the above-mentioned color-toning agent, a polymerization initiator, a polymerization promoter, a tackifier for viscosity increase, a dispersant for dispersion of particles, a charge controlling-agent for fixation on paper, wax, etc.

The color coating composition of the invention may contain one or more types of multi-layer film-coated powders that differ in the spectral properties either singly or as combined, and it may be applied to wet or dry color printing systems, or to wet or dry color magnetic printing systems. In addition, when powders of three primary colors are combined, the resulting mixtures may have the function of differentiating six combinations of visible light, non-visible light (UV range and extracyan range), fluorescent coloration, magnetic change and electric change (electric field change), and they are usable in other applications that require security functions, for example, for color magnetic inks for forgery prevention of prints.

In case where the coating composition of the invention is printed on substrates or applied onto objects for melt transfer or coating thereon, as a specific color ink, or a paint-like composition, or a specific color toner, or a specific color dry ink-like composition or a specific color dry coating composition, the relation between the content of the specific color multi-layer film-coated powder and that of the resin in the composition may fall between 1/0.5 and 1/15 as the ratio by volume of the two. If the content of the medium in the composition is too small, then the coating film could not fix on the coated objects; but if too large, then the pigment color is too thin and the ink or the coating composition is not good. The relation between the amount of the combination of the colorant and the resin, and that of the solvent in the color ink or the coating composition may fall between 1/0.5 and 1/10 as the ratio by volume of the two. If the amount of the solvent is too small, then the viscosity of the coating composition will be high and uniform coating with the composition would be impossible. If the amount of the solvent is too large, then drying the coating film will take a lot of time and the coating operation efficiency will significantly lower.

The color density of the coating film formed by printing the coating composition on substrates or by applying it to objects through melt transfer or coating thereon is determined depending on the amount of the pigment fixed on the unit area of the coated objects . The amount of the color multi-layer film-coatedpowder of the invention fixed on the coated objects, after dried thereon, may be from 0.1 to 300 $g/m^2$ in terms of the areal density of uniform coating, preferably from 0.1 to 100 $g/m^2$ for good coating color. When the areal density of the coating composition is smaller than the range, then the substrate color may appear; but even when larger than the range, the color density of the coated objects would no more change, and it is uneconomical. This is because, even when the pigment is fixed on the objects to a thickness more than a predetermined level, light could not reach the underlying pigment of the coating layer. Such a too thick coating film is over the covering power of the coating composition, and is ineffective for practicable coating, and it is therefore uneconomical. However, this shall not apply to intentional thick coating in consideration of abrasion resistance of the coating film, and also to partial coating for specific designs.

EXAMPLES

The invention is described more concretely with reference to the following Examples. Needless-to-say, however, the invention should not be limited to these.

Example 1 (Coating composition containing large color shift oxide film-coated aluminium powder)

This was so planned that the vertical reflected color could be red and the reflected color to 50-degree incident light could be blue.

(Formation of first layer titania film)

In a separable flask, 50 g of granular aluminium powder was dispersed in a liquid that had been previously prepared by adding 17.9 g of titanium isopropoxide to 198.3 g of ethanol, and then, with stirring, a solution that had been previously prepared by mixing 30.4 g of pure water with 47.9 g of ethanol was dropwise added thereto, taking 1 hour. After the addition, this was reacted at room temperature for 5 hours. After the reaction, this was diluted and washed with enough ethanol, then filtered, and dried in a vacuum drier at 110°C for 3 hours to obtain a titania-coated granular aluminium powder Al.

The titanium oxide film-coated powder Al was pale red, having a peak wavelength of the reflection spectral curve at 750 nm.

(Preparation of buffer solution 1)

0.3 mols of potassium chloride and 0.3 mols of boric acid were dissolved in 1 liter of water to prepare an aqueous solution 1.

0.4 mols of sodium hydroxide was dissolved in 1 liter of water to prepare an aqueous solution 2.

The solution 1 and the solution 2 were mixed in a ratio by volume of 250/115 to give a buffer solution 1.

(Formation of second layer silica film)

3751 g of the buffer solution 1 that had been previously prepared and 313 ml of pure water were added to 20 g of the silica-coated granular aluminium powder Al, and while ultrasonically processed in an ultrasonic bath at 28 kHz and 600 W, this was dispersed in the buffer solution 1 containing aluminium power with stirring. 1400 ml of an aqueous sodium silicate solution that had been also previously prepared was gradually added to it at a rate of 2.67 ml/min and a silica film was deposited on the surface of the particles.

After the addition of the aqueous sodium silicate solution, this was further reacted for 2 hours so that the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated granular aluminium powder A2.

(Preparation of buffer solution 2)

0.3 mols of acetic anhydride was dissolved in 1 liter of water to prepare an aqueous solution 3.

0.9 mols of sodium acetate was dissolved in 1 liter of water to prepare an aqueous solution 4.

The aqueous solution 3, the aqueous solution 4 and pure water were mixed in a ratio by volume of 5.0/100/250 to prepare a buffer solution 2.

(Formation of third layer titania film)

For 20 g of the powder A2, prepared were 5210 g of the buffer solution 2 and 5210 ml of pure water, and A2 was added to the mixture of the two and well dispersed in an ultrasonic bath while similarly exposed to ultrasonic waves. Next, the liquid temperature was kept at 50 to 55°C, and 2110 ml of an aqueous titanyl sulfate solution that had been previously prepared ($TiO_2$ concentration was varied to 15wt.%) was gradually and dropwise added to it at a constant rate of 1.25 ml/min. After the addition, this was further reacted for 3 hours and the unreacted components were gradually deposited.

After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 650°C for 30 minutes to obtain a silica/titania coated granular aluminium powder A3.

The powder was reddish yellow, and its maximum reflection peak was at 667 nm.

(Formation of fourth layer silica film)

To 20 g of the silica/titania coated granular aluminium powder A3, added were 3761 ml of the buffer solution 1 that had been previously prepared and 320 ml of pure water, like those to the first layer, and while exposed to ultrasonic waves in an ultrasonic bath at 28 kHz and 600 W, this was dispersed in the buffer solution 1 containing aluminium powder, with stirring. 1563 ml of aqueous sodium silicate solution that had also been previously prepared was gradually added to it at a rate of 2.67 ml/min, and a silica film was deposited on the surface of the particles.

After the addition of the aqueous sodium silicate solution thereto, this was further reacted for 2 hours so that the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated granular aluminium powder A4.

(Formation of fifth layer titania film)

For 40 g of the powder A4, prepared were 3852 ml of the buffer solution 2 and 328 ml of pure water, and the powder A4 was added to the mixture of the two and well dispersed in an ultrasonic bath while exposed to ultrasonic waves similarly to the step of silica film formation. Next, the liquid temperature was kept at 50 to 55°C, and 1568 ml of an aqueous titanyl sulfate solution that had been previously prepared ($TiO_2$, 15 wt.%) was gradually and dropwise added to it at a constant rate of 1.25 ml/min. After the addition, this was further reacted for 3 hours, and the unreacted components were gradually deposited as solid-phase fine particles, and the fine particles were taken into the coating film. After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder.

The resulting dry powder was heated (fired) in a rotary tube furnace at 650°C for 30 minutes to obtain a silica/titania coated granular aluminium powder A.

The five-layer film-coated powder A was vivid red, and its maximum reflection peak was at 718 nm

The film-coated powders were analyzed for the peak wavelength of the reflection spectral curve, the reflectance at the peak wavelength, the refractive index of the coating film, the film thickness, the peak height (H), the half-value width (W), and its ratio (H/W), according to the methods mentioned below.

1) To determine the vertical reflected light of the powder color, used was an integrating sphere-having spectrophotometer, Nippon Funko's V-570. The spectral reflectance and the color temperature were measured according to JISZ8722 (1982). A part of the sample was processed with focused ion beams and its cross section was observed with TEM for actual measurement.

2) The film thickness was measured according to the method described in WO96/28269. Briefly, the film thickness was optimized through computer simulation and from the waveforms.

The film thickness of each of the 1st to 5th layers, the peak wavelength of the reflection spectral curve of the film-coated powder, the peak height (H), the half-value width (W) and the ratio (H/W) are shown in Table 1.

Table 1

| Coating Layer | Film Thickness (nm) | Peak Wavelength (nm) | Peak Height (H) | Half-Value Width (W) | Ratio (H/W) |
|---|---|---|---|---|---|
| first layer titania film | 112 | 780 | 38 | 64 | 0.594 |
| second layer silica film | 150 | - | - | - | - |
| third layer titania film | 110 | 780 | 58 | 55 | 1.05 |
| fourth layer silica film | 160 | - | - | - | - |
| fifth layer titania film | 111 | 787 | 70 | 49 | 1.43 |

(Formulation of coating composition)

The following ingredients were formulated into a coating composition in the blend ratio mentioned below.

| | |
|---|---|
| Acrylic resin varnish (Acrydic A405) | 35 parts by weight |
| Epoxy resin varnish (Epon 1001, 10 % solution) | 10 parts by weight |
| Melamine resin varnish (Superbeccamine J820) | 5 parts by weight |
| Powder A | 5 parts by weight |
| Xylene | 24 parts by weight |
| Butyl alcohol | 19 parts by weight |
| Cellosolve acetate | 1.49 parts by weight |

(continued)

Silicone (SF69, 10 % solution)        0.01 parts by weight

The powder A was added to the solution prepared by mixing the above-mentioned xylene, butyl alcohol and silicone, and milled in a high-performance stirrer for 5 minutes, and the acrylic resin varnish, the epoxy resin varnish and the melamine resin varnish were added to it and fully homogenized. Theprocess gave a coating composition A.

(Evaluation of coated surface)

Thus obtained, the coating composition A was uniformly applied onto an iron plate in a draft equipped with a ventilator. Thus coated, the plate was dried at room temperature, and then further dried under heat in a box drier at 160°C for 3 hours. This is a coated plate A.

When seen vertically, the coated plate A was red. When inclined by 50 degrees, the plate was blue.

Example 2 (Oxide film-coated aluminium powder)

This was so planned that the vertical reflected color could be yellow.

(Formation of first layer silica film)

3751 g of the buffer solution 1 that had been previously prepared and 313 ml of pure water were added to 20 g of tabular aluminium powder (mean particle size, 8.5 $\mu$m), and while exposed to ultrasonic waves in an ultrasonic bath at 28 kHz and 600 W, this was stirred and dispersed in the buffer solution 1 containing aluminium powder. 1400 ml of an aqueous sodium silicate solution that had also been previously prepared was gradually added to it at a rate of 2.67 ml/min, and a silica film was deposited on the surface of the powder.

After the addition of the aqueous sodium silicate solution, this was further reacted for 2 hours and the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours, and then heated in a nitrogen atmosphere at 500°C to obtain a silica-coated granular aluminium powder B1.

(Formation of second layer titania film)

For 20 g of the powder B1, prepared were 5210 g of the buffer solution 2 and 5210 ml of pure water, and B1 was added to the mixture of the two and well dispersed in an ultrasonic bath while exposed to ultrasonic waves. Next, the liquid temperature was kept at 50 to 55°C, and 2210 ml of an aqueous titanyl sulfate solution that had been previously prepared ($TiO_2$ concentration was varied to 15 wt. %) was gradually and dropwise added to it at a constant rate of 1.25ml/min. After the addition, this was further reacted for 3 hours and the unreacted components were gradually deposited.

After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder.

The resulting dry powder was heated (fired) in a rotary tube furnace at 650°C for 30 minutes to obtain a silica/titania coated granular aluminium powder B2.

The powder was reddish yellow, and its maximum reflection peak was at 667 nm.

(Formation of third layer silica film)

To 20 g of the silica/titania coated granular aluminium powder B2, added were 3761 ml of the buffer solution 1 that had been previously prepared and 320 ml of pure water, like those to the first layer, and while exposed to ultrasonic waves in an ultrasonic bath at 28 kHz and 600 W, this was dispersed in the buffer solution 1 containing magnetite powder, with stirring. 1563 ml of aqueous sodium silicate solution that had also been previously prepared was gradually added to it at a rate of 2.67 ml/min, and a silica film was deposited on the surface of the particles.

After the addition of the aqueous sodium silicate solution thereto, this was further reacted for 2 hours so that the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated granular aluminium powder B3.

(Formation of fourth layer titania film)

For 40 g of the powder B3, prepared were 3852 ml of the buffer solution 2 and 328 ml of pure water, and the powder B3 was added to the mixture of the two and well dispersed in an ultrasonic bath while exposed to ultrasonic waves similarly to the step of silica film formation. Next, the liquid temperature was kept at 50 to 55°C, and 812 ml of an aqueous titanyl sulfate solution that had been previously prepared ($TiO_2$, 15 wt.%) was gradually and dropwise added to it at a constant rate of 1.25 ml/min. Then, this was reacted for 3 hours for deposition of solid-phase fine particles. The unreacted components were gradually deposited as solid-phase fine particles, and the fine particles were taken into the coating film.

After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 650°C for 30 minutes to obtain a silica/titania coated granular aluminium powder B4.

The four-layer film-coated powder B was vivid green, and its maximum reflection peak was at 558 nm (Formation of fifth layer of iron suboxide)

3200 ml of a buffer solution 4 for silica film formation and aqueous titania was put in a container, and this was kept at 90°C in a water bath. 20 g of B4 was added to it, and well stirred and dispersed.

With stirring, an acidic mixed solution of 45 ml of 0.1 M ferrous sulfate (4-hydrate) and 45 ml of 0.2 M ferric sulfate (n-hydrate - n is about 10.38) was dropwise added to the resulting solution at a rate of 0.7 ml/min. After the addition, this was further reacted for 2 hours with still stirring.

After the film formation, this was washed through decantation with enough pure water to remove the electrolyte. The powder was taken out through solid-liquid separation, and dried at 110°C for 8 hours. After thus dried, this was heated in a nitrogen atmosphere in a rotary tube furnace at 650°C to obtain a silica/titania/hematite-coated granular aluminium powder B.

Thus obtained, the powder B was vivid yellow, having a 70 % reflection peak at 606 nm.

The film thickness of each of the 1st to 5th layers, the peak wavelength of the reflection spectral curve of the film-coated powder, the peak height (H), the half-value width (W) and the ratio (H/W) are shown in Table 2.

Table 2

| Coating Layer | Film Thickness (nm) | Peak Wavelength (nm) | Peak Height (H) | Half-Value Width (W) | Ratio (H/W) |
|---|---|---|---|---|---|
| first layer silica film | 103 | - | - | - | - |
| second layer titania film | 75 | 667 | 48 | 56 | 0.857 |
| third layer silica film | 98 | - | - | - | - |
| fourth layer titania film | 75 | 558 | 58 | 49 | 1.18 |
| fifth layer hematite film | 151 | 606 | 70 | 44 | 1.59 |

(Formulation of coating composition)

The following ingredients were formulated into a coating composition in the blend ratio mentioned below.

Acrylic resin varnish (Acrydic A405)     64 parts by weight
Melamine resin varnish (Superbeccamine J820)
                                          28 parts by weight

(continued)

| Powder B | 1.5 parts by weight |
|---|---|
| Xylene | 5 parts by weight |
| Cellosolve acetate | 1.49 parts by weight |
| Silicone (SF69, 10 % solution) | 0.01 parts by weight |

The powder B was added to the solution prepared by mixing xylene and silicone, and milled in a high-performance stirrer for 5 minutes, and the acrylic resin varnish and the melamine resin varnish were added to it and fully homogenized. The process gave a coating composition B.

(Evaluation of coated surface)

Thus obtained, the coating composition B was uniformly applied onto an iron plate in a draft equipped with a ventilator. Thus coated, the plate was dried at room temperature, and then further dried under heat in a box drier at 160°C for 3 hours. This is a coated plate B.
When seen vertically, the coated plate B was yellow. When inclined by 50 degrees, the plate was red-violet.

Example 3 (Catalyst coating composition with white mica) (Formation of first layer titania film)

20 g of substrate particles of spherical white mica powder (mean particle size, 13.3 $\mu$m) were well dispersed in 2662 ml of the buffer solution 2 in an ultrasonic bath. Next, the liquid temperature was kept at 50 to 55°C, and 58 ml of an aqueous titanyl sulfate solution that had been previously prepared was gradually and dropwise added to it at a constant rate of 1.8 ml/min. After the addition, this was further reacted for 2 hours to obtain a titania-coated white mica powder C1.

(Formation of second layer silica film)

15 g of the titania-coated white mica powder C1 was further coated with a silica film. The amount of the buffer solution was 3751 ml, and an aqueous sodium silicate solution was dropwise added to it at a rate of 40 ml/min so as to form a coating film. This was reacted for 2 hours until any unreacted matter did not remain therein, and washed in the same manner as above. After the washing, this was heated (fired) in a nitrogen atmosphere in a rotary tube furnace at 500°C for 30 minutes to obtain a silica/titania coated white mica powder C2 having a tight titania film.

(Formation of third layer titania film)

For 15 g of the powder C2, prepared were 5210 g of the buffer solution 2 and 5210 ml of pure water, and C2 was added to the mixture of the two and well dispersed in an ultrasonic bath with stirring. Next, the liquid temperature was kept at 50 to 55°C, and 2110 ml of an aqueous titanyl sulfate solution that had been previously prepared ($TiO_2$, 15 wt.%) was gradually and dropwise added to it at a constant rate of 1.25 ml/min.
After the addition, this was further reacted for 3 hours, and the unreacted components were completely deposited.
After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 350°C for 30 minutes to obtain a silica/titania coated white mica powder C3.
The three-layer film-coated powder C3 was reddish, and its maximum reflection peak was at 787 nm.
The film thickness of each of the 1st to 3rd layers, the peak wavelength of the reflection spectral curve of the film-coated powder, the peak height (H), the half-value width (W) and the ratio (H/W) are shown in Table 3.

Table 3

| Coating Layer | Film Thickness (nm) | Peak Wavelength (nm) | Peak Height (H) | Half-Value Width (W) | Ratio (H/W) |
|---|---|---|---|---|---|
| first layer titania film | 112 | 780 | 38 | 64 | 0.593 |
| second layer silica film | 150 | - | - | - | - |

(continued)

| Coating Layer | Film Thickness (nm) | Peak Wavelength (nm) | Peak Height (H) | Half-Value Width (W) | Ratio (H/W) |
|---|---|---|---|---|---|
| third layer titania film | 111 | 787 | 60 | 55 | 1.09 |

(Formulation of coating composition)

The following ingredients were formulated into a coating composition in the blend ratio mentioned below.

| | |
|---|---|
| Powder C | 91 parts by weight |
| Zinc linseed oil | 0.9 parts by weight |
| Soybean stand oil | 8.1 parts by weight |

The above-mentioned zinc linseed oil and soybean stand oil were mixed, and the powder C3 was added to it little by little, and homogenized to obtain a stiff paste coating composition C.

(Evaluation of coated surface)

Thus obtained, the coating composition C was uniformly applied onto an iron plate in a draft equipped with a ventilator. Thus coated, the plate was dried at room temperature, and then further dried under heat in a box drier at 160°C for 3 hours. This is a coated plate C.
When seen vertically, the coated plate C was red. When inclined by 50 degrees, the plate was blue.

Example 4 (Coating composition containing large color shift oxide film-coated tabular iron powder)

This was so planned that the vertical reflected color could be gray and the reflected color to 30-degree incident light could be green.

(Formation of first layer titania film)

In a separable flask, 20 g of tabular iron powder (mean particle size, 15 microns) was dispersed in a liquid that had been previously prepared by adding 17.9 g of titanium isopropoxide to 198.3 g of ethanol, and then, with stirring, a solution that had been previously prepared by mixing 30.4 g of pure water with 47.9 g of ethanol was dropwise added thereto, taking 1 hour. After the addition, this was reacted at room temperature for 5 hours. After the reaction, this was diluted and washed with enough ethanol, then filtered, and dried in a vacuum drier at 110°C for 3 hours to obtain a titania-coated tabular iron powder D1.
The titanium oxide film-coated powder D1 was red-violet, having a peak wavelength of the reflection spectral curve at 390 nm and 787 nm.

(Preparation of buffer solution 1)

0.3 mols of potassium chloride and 0.3 mols of boric acid were dissolved in 1 liter of water to prepare an aqueous solution 1.
0.4 mols of sodium hydroxide was dissolved in 1 liter of water to prepare an aqueous solution 2.
The solution 1 and the solution 2 were mixed in a ratio by volume of 250/115 to give a buffer solution 1.

(Formation of second layer silica film)

3751 g of the buffer solution 1 that had been previously prepared and 313 ml of pure water were added to 20 g of the titania-coated tabular iron powder D1, and while ultrasonically processed in an ultrasonic bath at 28 kHz and 600 W, this was dispersed in the buffer solution 1 containing iron power with stirring. 1400 ml of an aqueous sodium silicate solution that had been also previously prepared was gradually added to it at a rate of 2.67 ml/min and a silica film was deposited on the surface of the particles.
After the addition of the aqueous sodium silicate solution, this was further reacted for 2 hours so that the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated tabular iron powder D2.

(Formation of third layer titania film)

(Preparation of buffer solution 2)

0.3 mols of acetic anhydride was dissolved in 1 liter of water to prepare an aqueous solution 3.

0.9 mols of sodium acetate was dissolved in 1 liter of water to prepare an aqueous solution 4.

The aqueous solution 3, the aqueous solution 4 and pure water were mixed in a ratio by volume of 50/100/250 to prepare a buffer solution 2.

(Preparation of aqueous titanium sulfate solution)

Titanium sulfate was added to water so that the $TiO_2$ concentration could be 10 wt.%, and its concentration was controlled to prepare an aqueous titanium sulfate solution.

(Formation of titania film)

For 5.5 g of the powder D2, prepared was 250 ml of the buffer solution 2 (pH 4. 1), and D2 was added to the buffer solution 2 and well dispersed in an ultrasonic bath. Next, the liquid temperature was kept at 50 to 55°C, and 57 ml of the aqueous titanium sulfate solution that had been previously prepared was dropwise added to it at a rate of 1.5 ml/min, and the unreacted components were gradually deposited. (washing and drying)

After the film formation, this was repeatedly subjected to decantation with pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 650°C for 30 minutes to obtain a smooth surface-having, silica/titania coated granular aluminium powder D3.

The three-layer film-coated powder D3 was red-violet, having a maximum reflection peak at 388 nm and 778 nm.

(Formation of fourth layer silica film)

To 20 g of the silica/titania coated tabular iron powder D3, added were 3751 g of the buffer solution 1 and 320 ml of pure water, like those to the second layer, and while exposed to ultrasonic waves in an ultrasonic bath at 28 kHz and 600 W, this was dispersed in the buffer solution 1 containing iron powder, with stirring. 1400 ml of aqueous sodium silicate solution that had also been previously prepared was gradually added to it at a rate of 2.67 ml/min, and a silica film was deposited on the surface of the particles.

After the addition of the aqueous sodium silicate solution thereto, this was further reacted for 2 hours so that the unreacted materials were all reacted.

After the film formation, the silica/titania film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated tabular iron powder D4.

(Formation of fifth layer titania film)

For 5.5 g of the powder D4, prepared were 250 ml of the buffer solution 2 (pH 4.1), and D4 was added to the buffer solution 2 and well dispersed in an ultrasonic bath. Next, the liquid temperature was kept at 50 to 55°C, and 57 ml of the aqueous titanium sulfate solution that had been previously prepared was dropwise added to it at a rate of 1.5 ml/min, and the unreacted components were gradually deposited. After the film formation, this was repeatedly subjected to decantation with pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 650°C for 30 minutes to obtain a smooth surface-having, silica/titania coated tabular iron powder D.

The five-layer film-coated powder D was gray, having a maximum reflection peak at 392 nm and 557 nm.

The film thickness of each of the 1st to 5th layers, the peak wavelength of the reflection spectral curve of the film-coated powder, the peak height (H), the half-value width (W) and the ratio (H/W) are shown in Table 4.

Table 4

| Coating Layer | Film Thickness (nm) | Peak Wavelength (nm) | Peak Height (H) | Half-Value Width (W) | Ratio (H/W) |
|---|---|---|---|---|---|
| first layer titania film | 50 | 390 | 33 | 43 | 0.767 |
| second layer silica film | 99 | - | - | - | - |
| third layer titania film | 82 | 388 | 44 | 43 | 1.02 |
| fourth layer silica film | 103 | - | - | - | - |
| fifth layer titania film | 148 | 392 | 61 | 27 | 2.4 |

(Formation of coating liquid)

15 g of the powder D was dispersed in 100 ml of a xylene solution containing 5 % acrylic resin, and applied onto art paper with a blade coater.

The art paper was patternwise cut, and attached onto another art paper, and the pattern was colorless gray when seen from its top.

However, when the coated paper-stuck paper was inclined by 30 degrees, it became green. When inclined by 60 degrees, the incident light was red-violet. Finally, when it was again set vertically, it was colorless gray.

This will be because of the following reasons: Red-violet at around 390 nm is just complementary to green at 557 nm, and combining the two give a colorless appearance. However, when inclined in some degree, red-violet at around 390 nm disappears from the visible range and, at the same time, green appears in the visible range. When further inclined, green disappears, and when inclined sufficiently, the green peak may disappear, and the.next red-violet peak may appear from the infrared range.

Example 5 (Coating composition containing large color shift oxide film-coated tabular iron powder)

This was so planned that the vertical reflected color could be green and the 50-degree incident light could be red.

(Formation of first layer silica film)

In a separable flask, 22 g of tabular iron powder (mean particle size, 15 microns) was dispersed in a liquid that had been previously prepared by adding 10.7 g of silicon ethoxide to 198.3 g of ethanol, and then, with stirring, a mixed solution of 10.7 g of aqueous ammonia (29 %) and 8.8 g of pure water that had been previously prepared was added to it. After the addition, this was reacted at room temperature for 5 hours. After the reaction, this was diluted and washed with enough ethanol, then filtered, and dried in a vacuum drier at 110°C for 3 hours to obtain a dry powder. The resulting dry powder was heated (fired) in a rotary tube furnace at 650°C for 30 minutes to obtain a silica-coated tabular iron powder E1.

(Formation of second layer titania film)

In a separable flask, 22 g of the silica-coated tabular iron powder E1 was dispersed in a liquid that had been previously prepared by adding 17.9 g of titanium isopropoxide to 198.3 g of ethanol, and then, with stirring, a solution that had been previously prepared by mixing 30.4 g of pure water with 47.9 g of ethanol was dropwise added thereto, taking 1 hour. After the addition, this was reacted at room temperature for 5 hours. After the reaction, this was diluted and washed with enough ethanol, then filtered, and dried in a vacuum drier at 110°C for 3 hours to obtain a silica/titania coated tabular iron powder E2.

E2 was dark green, having a peak wavelength of the reflection spectral curve at 540 nm.

(Preparation of buffer solution 1)

0.3 mols of potassium chloride and 0.3 mols of boric acid were dissolved in 1 liter of water to prepare an aqueous solution 1.

0.4 mols of sodium hydroxide was dissolved in 1 liter of water to prepare an aqueous solution 2.

The solution 1 and the solution 2 were mixed in a ratio by volume of 250/115 to give a buffer solution 1.

(Formation of third layer silica film)

3751 g of the buffer solution 1 that had been previously prepared and 313 ml of pure water were added to 20 g of the silica/titania coated tabular iron powder E2, and while ultrasonically processed in an ultrasonic bath at 28 kHz and 600 W, this was dispersed in the buffer solution 1 containing iron power with stirring. 1400 ml of an aqueous sodium silicate solution that had been also previously prepared was gradually added to it at a rate of 2.67 ml/min and a silica film was deposited on the surface of the particles.

After the addition of the aqueous sodium silicate solution, this was further reacted for 2 hours so that the unreacted materials were all reacted.

After the film formation, the silica film-coated powder-containing slurry was subjected to repeated decantation with enough water and washed.

After the washing, the silica film-coated powder was put into a vat, sedimented and separated, and the supernatant was removed. This was dried in air in a drier at 150°C for 8 hours to obtain a silica/titania coated tabular iron powder E3.

(Preparation of buffer solution 2)

0.3 mols of acetic anhydride was dissolved in 1 liter of water to prepare an aqueous solution 3.

0.9 mols of sodium acetate was dissolved in 1 liter of water to prepare an aqueous solution 4.

The aqueous solution 3, the aqueous solution 4 and pure water were mixed in a ratio by volume of 50/100/250 to prepare a buffer solution 2.

(Formation of fourth layer titania film)

For 22 g of the powder E3, prepared were 5210 g of the buffer solution 2 and 5210 ml of pure water, and E3 was added to the mixture of the two and well dispersed in an ultrasonic bath while similarly exposed to ultrasonic waves. Next, the liquid temperature was kept at 50 to 55°C, and 2110 ml of an aqueous titanyl sulfate solution that had been previously prepared ($TiO_2$ concentration was varied to 15 wt. %) was gradually and dropwise added to it at a constant rate of 1.25 ml/min. After the addition, this was further reacted for 3 hours and the unreacted components were gradually deposited.

After the film formation, this was repeatedly subjected to decantation with enough pure water, and the unreacted components, the excess sulfuric acid and the sulfuric acid formed through the reaction were removed. Then, this was subjected to solid-liquid separation, and dried in a vacuum drier to obtain a dry powder. The resulting dry powder was heated (fired) in a rotary tube furnace at 650°C for 30 minutes to obtain a silica/titania coated tabular iron powder E.

The powder was green, and its maximum reflection peak was at 543 nm.

The film thickness of each of the 1st to 4th layers, the peak wavelength of the reflection spectral curve of the film-coated powder, the peak height (H), the half-value width (W) and the ratio (H/W) are shown in Table 5.

Table 5

| Coating Layer | Film Thickness (nm) | Peak Wavelength (nm) | Peak Height (H) | Half-Value Width (W) | Ratio (H/W) |
|---|---|---|---|---|---|
| first layer silica film | 75 | - | - | - | - |
| second layer titania film | 55 | 540 | 35 | 44 | 0.795 |
| third layer **silica** film | 75 | | - | | - |
| fourth layer titania film | 70 | 543 | 51 | 23 | 2.22 |

(Formation of coating liquid)

A coating liquid E was produced in the blend ration mentioned below.

| | |
|---|---|
| Powder E | 43 parts by weight |
| Resin solution PAM (SP-67) (by Mitsui Toatsu Chemical) | |
| (containing 20 % amine-type resin) | 40 parts by weight |
| Pure Water | 13 parts by weight |

The powder E was put into the resin solution, and with stirring, pure water was added to it to produce the coating liquid EL.

(Coating)

The coating liquid EL was uniformly appliedonto art paper, and the coating amount of the powder was 51 g/m2. Seen vertically, the coated paper was green, and its maximum reflection peak was at 560 nm. Seen at an angle of 50 degrees, the coated paper was red.

Example 6 (Red-violet powder with iron powder)

This was so planned that the vertical reflected color could be red-violet.

(Formation of first layer silica film)

In a separable flask, 30 g of tabular iron powder (mean particle size, 15 microns) was added to and dispersed in an ethanol-mixed solution that had been prepared by mixing 196 g of ethanol, 10 g of pure water and 10 g of ammonia, by the use of an ultrasonic disperser for 5 minutes. Then, with stirring with a stirrer, 6 g of tetraorthosilicate (TEOS) was added to it and reacted for 5 hours.
After the film formation, the silica film-coated powder-containing slurry was subjected to repeated decantation with enough alcohol and washed.
After the washing, the silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder F1.

(Formation of second layer titania film)

In a separable flask, 30 g of the silica-coated iron powder F1 was dispersed in a liquid that had been previously prepared for it by adding 17.9 of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder F2.
F2 had a cyan color and its peak wavelength of the reflection spectrum curve was 455 nm.

(Formation of third layer silica film)

30 g of the titania/silica coated iron powder F2 was dispersed in an ethanol-mixed solution that had been prepared by mixing 196 g of ethanol, 10 g of pure water and 10 g of ammonia, by the use of an ultrasonic disperser for 5 minutes . Then, with stirring with a stirrer, 6 g of tetraorthosilicate (TEOS) was added to it and reacted for 5 hours.
After the film formation, the titania/silica film-coated powder-containing slurry was subjected to repeated decantation with enough alcohol and washed.
After the washing, the titania/silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder F3.

(Formation of fourth layer titania film)

In a separable flask, 30 g of the silica-coated iron powder F3 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder F4. F4 was green, having a peak wavelength of the reflection spectrum curve at 450 nm.

(Formation of fifth layer titania film)

In a separable flask, 30 g of the titania/silica coated iron powder F4 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subj ected to solid-liquid separation, dried in a vacuum drier at 110°C for 3 hours, then heated in a rotary tube furnace at 650°C for 30 minutes, and then cooled to obtain a powder F5.
F5 was a red-violet powder, having a peak wavelength of the reflection spectrum curve at 382 nm and 821 nm and having a valley at 356 nm, 556 nm and 900 nm. The magnetization of F5 at 10 kOe was 170 emu/g.
The film thickness of each of the 1st to 5th layers, the peak wavelength of the reflection spectral curve of the film-coated powder, the peak height (H), the half-value width (W) and the ratio (H/W) are shown in Table 6.

Table 6

| Coating Layer | Film Thickness (nm) | Peak Wavelength (nm) | Peak Height (H) | Half-Value Width (W) | Ratio (H/W) |
|---|---|---|---|---|---|
| first layer silica film | 81 | - | - | - | - |
| second layer titania film | 56 | 455 | 40 | 40 | 1.0 |
| third layer silica film | 88 | - | - | - | - |
| fourth layer titania film | 55 | 450 | 65 | 33 | 1.97 |
| fifth layer titania film | 49 | 382 | 71 | 30 | 2.37 |

Example 7 (Red-violet powder 1 with granular iron powder)

This was so planned that the vertical reflected color could be red-violet.

(Formation of first layer silica film)

In a separable flask, 20 g of granular carbonyl iron powder (mean particle size, 1.8 microns) was added to and dispersed in an ethanol-mixed solution that had been prepared by mixing 196 g of ethanol, 10 g of pure water and 10 g of ammonia, by the use of an ultrasonic disperser for 5 minutes. Then, with stirring with a stirrer, 6 g of tetraorthosilicate (TEOS) was added to it and reacted for 5 hours.
After the film formation, the silica film-coated powder-containing slurry was subjected to repeated decantation with enough alcohol and washed.
After the washing, the silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder G1.

(Formation of second layer titania film)

In a separable flask, 20 g of the silica-coated iron powder G1 was dispersed in a liquid that had been previously prepared for it by adding 17.9 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder G2.

G2 had a cyan color and its peak wavelength of the reflection spectrum curve was 451 nm.

(Formation of third layer silica film)

20 g of the titania/silica coated iron powder G2 was dispersed in an ethanol-mixed solution that had been prepared by mixing 196 g of ethanol, 10 g of pure water and 10 g of ammonia, by the use of an ultrasonic disperser for 5 minutes. Then, with stirring with a stirrer, 6 g of tetraorthosilicate (TEOS) was added to it and reacted for 5 hours.

After the film formation, the silica film-coated powder-containing slurry was subjected to repeated decantation with enough alcohol and washed.

After the washing, the titania/silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder G3.

(Formation of fourth layer titania film)

In a separable flask, 20 g of the titania/silica coated iron powder G3 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder G4.

G4 was green, having a peak wavelength of the reflection spectrum curve at 450 nm.

(Formation of fifth layer titania film)

In a separable flask, 20 g of the titania/silica coated iron powder G4 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°c for 3 hours, then heated in a rotary tube furnace at 650°C for 30 minutes, and then cooled to obtain a powder G5.

The titanium oxide film was red-violet, having a peak wavelength of the reflection spectrum curve at 380 nm and 820 nm and having a valley at 355 nm, 556 nm and 902 nm. The magnetization of the powder G5 at 10 kOe was 140 emu/g.

The film thickness of each of the 1st to 5th layers, the peak wavelength of the reflection spectral curve of the film-coated powder, the peak height (H), the half-value width (W) and the ratio (H/W) are shown in Table 7.

Table 7

| Coating Layer | Film Thickness (nm) | Peak Wavelength (nm) | Peak Height (H) | Half-Value Width (W) | Ratio (H/W) |
|---|---|---|---|---|---|
| first layer silica film | 81 | - | - | - | - |
| second layer titania film | 55 | 451 | 40 | 40 | 1.0 |
| third layer silica film | 88 | - | - | - | - |
| fourth layer titania film | 55 | 450 | 65 | 33 | 1.97 |
| fifth layer titania film | 49 | 380 | 71 | 30 | 2.37 |

(Method for fabricating forgery-preventing discriminator)

15 g of the powder G5 was kneaded in 10 ml of aqueous polymethacrylamine solution (100 ml/liter) to prepare an ink-like composition LF.

Using Riso Kagaku's PG10, a pattern 1 was printed to obtain a printed matter PF for discrimination.

Next, 15 g of the powder G5 was kneaded in 10 ml of aqueous polymethacrylamine solution (100 ml/liter) to prepare an ink-like composition LG.

Using Riso Kagaku's PG10, a pattern "A" was printed with the ink-like composition LG, and an area around it was printed with LF to obtain a printed matter PF for discrimination.

When seen vertically, the overall surface of the printed matter PF was wholly red-violet; but when the viewing angle was changed and when this was seen at an inclined angle of 30 degrees, then the letter "A" changed to green, and the area around it was still red-violet.

In that manner, the truth of the printed matter could be readily checked with the naked eye.

When the printed part "A" was scanned with a magnetic head, then the printed part "A" gave a strong reaction. In addition, when Pip Fujimoto's medical magnet having a surface magnetic flux density of 3000G was brought close to it, then the printed part was attracted by its magnetic force.

Example 8 (silver-coated yellow-green powder with iron powder)

This was so planned that the vertical reflected color could be yellow-green.

(Formation of first layer silica film)

In a separable flask, 30 g of tabular iron powder (mean particle size, 15 microns) was added to and dispersed in an ethanol-mixed solution that had been prepared by mixing 196 g of ethanol, 10 g of pure water and 10 g of ammonia, by the use of an ultrasonic disperser for 5 minutes. Then, with stirring with a stirrer, 6 g of tetraorthosilicate (TEOS) was added to it and reacted for 5 hours.

After the film formation, the silica film-coated powder-containing slurry was subjected to repeated decantation with enough alcohol and washed.

After the washing, the silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder H1.

(Formation of second layer titania film)

In a separable flask, 30 g of the silica-coated iron powder H1 was dispersed in a liquid that had been previously prepared for it by adding 17.9 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder H2.

H2 had a cyan color and its peak wavelength of the reflection spectrum curve was 455 nm.

(Formation of third layer silica film)

30 g of the titania/silica coated iron powder H2 was dispersed in an ethanol-mixed solution that had been prepared by mixing 196 g of ethanol, 10 g of pure water and 10 g of ammonia, by the use of an ultrasonic disperser for 5 minutes . Then, with stirring with a stirrer, 6 g of tetraorthosilicate (TEOS) was added to it and reacted for 5 hours.

After the film formation, the titania/silica film-coated powder-containing slurry was subjected to repeated decantation with enough alcohol and washed.

After the washing, the titania/silica film-coated powder was put into a vat, sedimented and separated, and the supernatant was removed. This was dried in air in a vacuum drier at 150°C for 8 hours, and then heated in a rotary tube furnace at 650°c for 30 minutes and cooled to obtain a silica-coated iron powder H3.

(Formation of fourth layer titania film)

In a separable flask, 30 g of the titania/silica coated iron powder H3 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°c for 3 hours, then heated in a rotary tube furnace at 650°C for 30 minutes, and then cooled to obtain a titania/silica coated iron powder H4.

H4 had a cyan color, and its peak wavelength of the reflection spectrum curve was 450 nm.

(Formation of fifth layer titania film)

In a separable flask, 20 g of the titania/silica coated iron powder H4 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a powder H5.

(Formation of sixth layer silver film)

4 g of tartaric acid and 45 g of glucose were dissolved in 1 liter of pure water with heating, and the resulting solution was further heated and boiled for 5 minutes. Then, this was left cooled, and after reached room temperature, this was mixed with 100 ml of ethanol and homogenized, and stored in a dark for 5 days to give a reducing solution.

2 g of silver nitrate was dissolved in 60 ml of pure water, and aqueous ammonia (29 % solution) was added to it, and silver oxide was thereby deposited. Ammonia was further added to it and completely dissolved. Then, an aqueous solution that had been previously prepared by dissolving 1.4 g of sodium hydroxide in 60 ml of pure water was added to it so as to deposit silver oxide. Ammonia was further added to it and completely dissolved to give a silver solution.

The powder H5 was dispersed in the silver solution, and with stirring, 20 ml of the above-mentioned reducing solution was put into it, and reacted for 30 minutes. After the reaction, this was washed through decantation and then subjected to solid-liquid separation, and dried in a vacuum drier at 250°C for 8 hours.

After thus dried, an yellow-green powder H6 was obtained having a peak at 588 nm.

The film thickness of each of the 1st to 6th layers, the peak wavelength of the reflection spectral curve of the film-coated powder, the peak height (H), the half-value width (W) and the ratio (H/W) are shown in Table 8.

Table 8

| Coating Layer | Film Thickness (nm) | Peak Wavelength (nm) | Peak Height (H) | Half-Value Width (W) | Ratio (H/W) |
|---|---|---|---|---|---|
| first layer silica film | 81 | - | - | - | - |
| second layer titania film | 56 | 455 | 40 | 40 | 1.00 |
| third layer silica film | 88 | - | - | - | - |
| fourth layer titania film | 55 | 450 | 65 | 33 | 1.97 |
| fifth layer titania film | 49 | 382 | 71 | 30 | 2.37 |
| sixth layer silver layer | 25 | 588 | 72 | 28 | 2.57 |

Example 9 (yellow-green powder 2 with spherical iron powder)

This was so planned that the vertical reflected color could be yellow-reen.

(Formation of first layer silica film)

In a separable flask, 20 g of granular carbonyl iron powder (mean particle size, 1.8 microns) was added to and dispersed in an ethanol-mixed solution that had been prepared by mixing 196 g of ethanol, 10 g of pure water and 10 g of ammonia, by the use of an ultrasonic disperser for 5 minutes. Then, with stirring with a stirrer, 6 g of tetraorthosilicate (TEOS) was added to it and reacted for 5 hours.

After the film formation, the silica film-coated powder-containing slurry was subjected to repeated decantation with enough alcohol and washed.

After the washing, the silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a silica-coated iron powder I1.

(Formation of second layer titania film)

In a separable flask, 20 g of the silica-coated iron powder I1 was dispersed in a liquid that had been previously prepared for it by adding 17.9 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder 12.

The titanium oxide film had a cyan color and its peak wavelength of the reflection spectrum curve was 451 nm.

(Formation of third layer silica film)

20 g of the titania/silica coated iron powder 12 was dispersed in an ethanol-mixed solution that had been prepared by mixing 196 g of ethanol, 10 g of pure water and 10 g of ammonia, by the use of an ultrasonic disperser for 5 minutes . Then, with stirring with a stirrer, 6 g of tetraorthosilicate (TEOS) was added to it and reacted for 5 hours.

After the film formation, the silica film-coated powder-containing slurry was subjected to repeated decantation with enough alcohol and washed.

After the washing, the titania/silica film-coated powder was put into a vat, sedimented and separated, and the supernatant was removed. This was dried in air in a vacuum drier at 150°C for 8 hours, and then heated in a rotary tube furnace at 650°C for 30 minutes and cooled to obtain a titania/silica-coated iron powder I3.

(Formation of fourth layer titania film)

In a separable flask, 20 g of the titania/silica coated iron powder 13 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a titania/silica coated iron powder 14.

14 had a cyan color, and its peak wavelength of the reflection spectrum curve was 450 nm.

(Formation of fifth layer titania film)

In a separable flask, 20 g of the silica-coated iron powder I4 was dispersed in a liquid that had been previously prepared for it by adding 22 g of titanium isopropoxide to 198.3 g of ethanol, and, with stirring, a solution that had been previously prepared by mixing 30.4 g of pure water with 47.9 g of ethanol was dropwise added to it, taking 1 hour. After the addition, this was reacted at room temperature for 4 hours. After the reaction, this was diluted and washed with enough ethanol, subjected to solid-liquid separation, dried in a vacuum drier at 110°C for 3 hours, then heated in a rotary tube furnace at 650°C for 30 minutes, and then cooled to obtain a powder 15.

15 was red-violet, having a peak wavelength of the reflection spectral curve at 380 nm and 820 nm and having a valley at 355 nm, 556 nm and 902 nm. The magnetization of the powder 15 at 10 kOe was 140 emu/g.

(Formation of sixth layer silver film)

4 g of tartaric acid and 45 g of glucose were dissolved in 1 liter of pure water with heating, and the resulting solution was further heated and boiled for 5 minutes. Then, this was left cooled, and after reached room temperature, this was mixed with 100 ml of ethanol and homogenized, and stored in a dark for 5 days to give a reducing solution.

3.5 g of silver nitrate was dissolved in 60 ml of pure water, and aqueous ammonia (29 % solution) was added to it, and silver oxide was thereby deposited. Ammonia was further added to it and completely dissolved. Then, an aqueous solution that had been previously prepared by dissolving 2.1 g of sodium hydroxide in 60 ml of pure water was added to it so as to deposit silver oxide. Ammonia was further added to it and completely dissolved to give a silver solution.

The powder I5 was dispersed in the silver solution, and with stirring, 20 ml of the reducing solution was put into it, and reacted for 30 minutes. After the reaction, this was washed through decantation and then subjected to solid-liquid separation, and dried in a vacuum drier at 250°C for 8 hours.

After thus dried, an yellow-green powder I6 was obtained having a peak at 590 nm.

The film thickness of each of the 1st to 6th layers, the peak wavelength of the reflection spectral curve of the film-coated powder, the peak height (H), the half-value width (W) and the ratio (H/W) are shown in Table 9.

Table 9

| Coating Layer | Film Thickness (nm) | Peak Wavelength (nm) | Peak Height (H) | Half-Value Width (W) | Ratio (H/W) |
|---|---|---|---|---|---|
| first layer silica film | 81 | - | - | - | - |
| second layer titania film | 56 | 451 | 40 | 40 | 1.00 |
| third layer silica film | 88 | - | - | - | - |
| fourth layer titania film | 55 | 450 | 65 | 33 | 1.97 |
| fifth layer titania film | 48 | 380 | 71 | 30 | 2.37 |
| sixth layer silver layer | 25 | 590 | 72 | 28 | 2.57 |

(Method for fabricating forgery-preventing discriminator)

15 g of the powder H6 was kneaded in 10 ml of aqueous polymethacrylamine solution (100 ml/liter) to prepare an ink-like composition LH.

Using Riso Kagaku's PG10, a pattern 1 was printed to obtain a printed matter PF for discrimination.

Next, 15 g of the powder I6 was kneaded in 10 ml of aqueous polymethacrylamine solution (100 ml/liter) to prepare an ink-like composition LI.

Using Riso Kagaku's PG10, a pattern "B" was printed with the ink-like composition LH, and an area around it was printed with LI to obtain a printed matter PI for discrimination.

When seen vertically, the overall surface of the printed matter PI was wholly yellow-green; but when the viewing angle was changed, then the letter "B" changed to green, and the area around it was still yellow-green.

In that manner, the truth of the printed matter could be readily checked with the naked eye.

When the printed part "B" was scanned with a magnetic head, then the printed part "B" gave a strong reaction. In addition, when Pip Fujimoto's medical magnet was brought close to it, then the printed part was attracted by its magnetic force.

Example 10

A 1/4λ alternate films-coated powder was prepared, having a maximum reflectance at 430-nm light.

(Selection of substrate particles and coating layers)

For the substrate particles, selected was BASF's spherical iron powder (trade name, HQ) having a particle size of 1.8 μm.

For the coating layers, selected was an $SiO_2$/$TiO_2$ alternate 4-layer structured film formed on the substrate particles.

Based on the substrate particles (BASF's spherical iron powder HQ) and the coating layer structure thus selected as above, the following equation (1) was solved, and the resulting value $R_{flat}$ was applied to the following equation (2) to thereby calculate the thickness of each coating layer that shows the maximum reflection at 430-nm light:

$$R_{j+1,j} = \frac{r_{j+1,j} + R_{j,j-1} \exp(-2i\delta_j)}{1 + r_{j+1,j} R_{j,j-1} \exp(-2i\delta_j)}$$

(1)

$$2\delta_j = \frac{4\pi}{\lambda} n_j d_j \cos\phi_j$$

wherein $R_{j+1,j}$ indicates the amplitude reflection intensity between the j-th layer from the bottom and the layer just above it;

j indicates an integer of 1 or more (j - 1 = 0 indicates the substrate);

i indicates an imaginary unit;

$r_{j+i,j}$ indicates the Fresnel reflectance coefficient of the interface between the j-th layer from the bottom and the layer just above it;

$R_{j,j-i}$ indicates the amplitude reflection intensity between the (j-1)th layer from the bottom and the layer just above it;

$2\delta_j$ indicates the phase difference at the j-th layer from the bottom,

$\lambda$ indicates the desired reflected light wavelength;

$n_j$ indicates the refractive index of the j-th layer from the bottom;

$d_j$ indicates the thickness of the j-th layer from the bottom;

$\phi_j$ indicates the light incident angle into the j-th layer from the bottom:

$$R(\lambda) = \int_0^{\frac{\pi}{2}} \sin 2\theta \cdot R_{flat}(\lambda, \theta) \cdot d\theta \qquad (2)$$

wherein $\theta$ indicates the incident angle into the outermost layer.

The calculated data of the film thickness of each coating layer, obtained according to the above-mentioned equations (1) and (2), were as follows: The first layer $SiO_2$ film was 60.3 nm; the second layer $TiO_2$ film was 49.2 nm; the third layer $SiO_2$ film was 70.6 nm; and the fourth layer $TiO_2$ film was 42.6 nm.

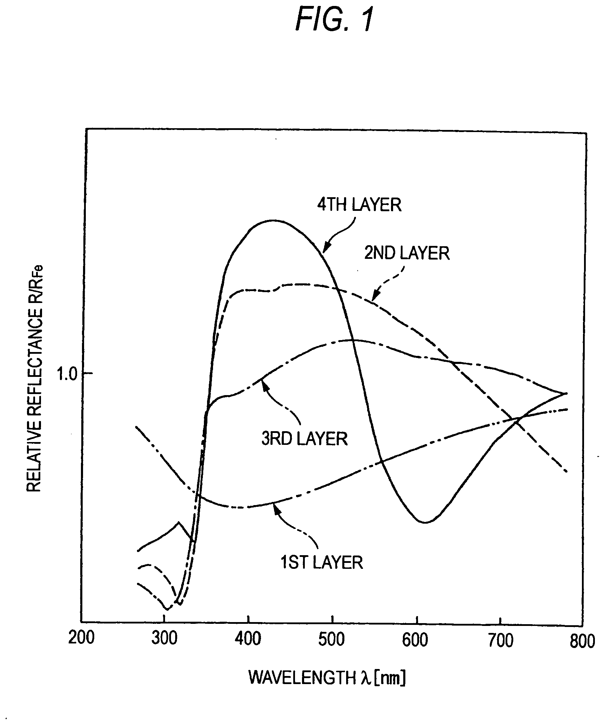

The calculated data of the relative reflectance of each coating layer are as in Fig. 1.

(Production of film-coated powder for particle size correction of first layer $SiO_2$ film)

Varying the film-forming reaction condition, an $SiO_2$ film was formed on the above-selected substrate particles (BASF's spherical iron powder HQ), and eight different types of samples each having a different coating film thickness were thus prepared. The $SiO_2$ film formation was effected according to the metal alkoxide hydrolysis method described in International Patent Laid-open WO96/28269. Each of these eight types of the samples, coated powder for particle size correction of the first layer $SiO_2$ film, was cut by processing it with focused ion beams (FIB), and the actual film thickness ($d_M$) was determined by observing the cut face thereof with an electronic microscope. The data are given in Table 10 below.

Table 1

| Sample Powder | Measure Data of Film Thickness |
|---|---|
| No. 1 | 57.1 |
| No. 2 | 58.2 |
| No. 3 | 58.6 |

(continued)

| Sample Powder | Measure Data of Film Thickness |
|---|---|
| No. 4 | 59.5 |
| No. 5 | 71.4 |
| No. 6 | 94.2 |
| No. 7 | 97.8 |
| No. 8 | 99.6 |

In addition, the wavelength at which each of the above-mentioned eight samples, coated powder for particle size correction of the first layer $SiO_2$ film, has a maximum absorption was measured with a spectrophotometer, and the maximum absorption wavelength was divided by 4 to give an optical film thickness (nd) of the layer.

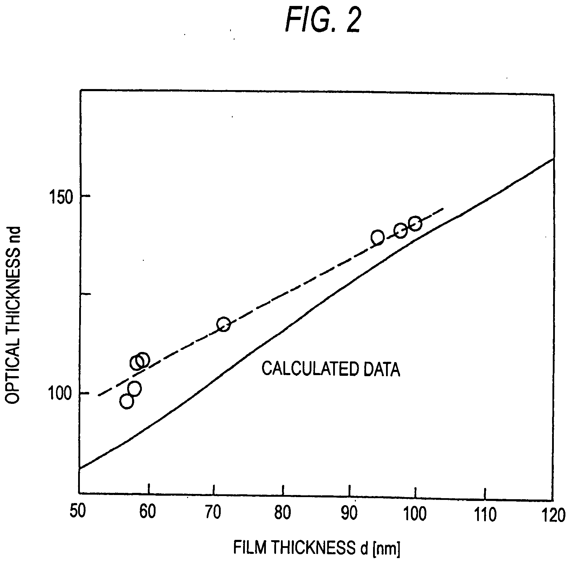

Fig. 2. shows a relational curve (dotted line) of the measured data of film thickness ($d_M$) vs the optical film thickness (nd) of the eight samples, coated powder for particle size correction of the first layer $SiO_2$ film. In this, the full line indicates the calculated data of the measured film thickness ($d_M$) vs the optical film thickness (nd) obtained according to the above-mentioned equations (1) and (2). (Correction of spectral characteristics corresponding to the calculated data of film thickness of the first layer $SiO_2$ film, and film formation)

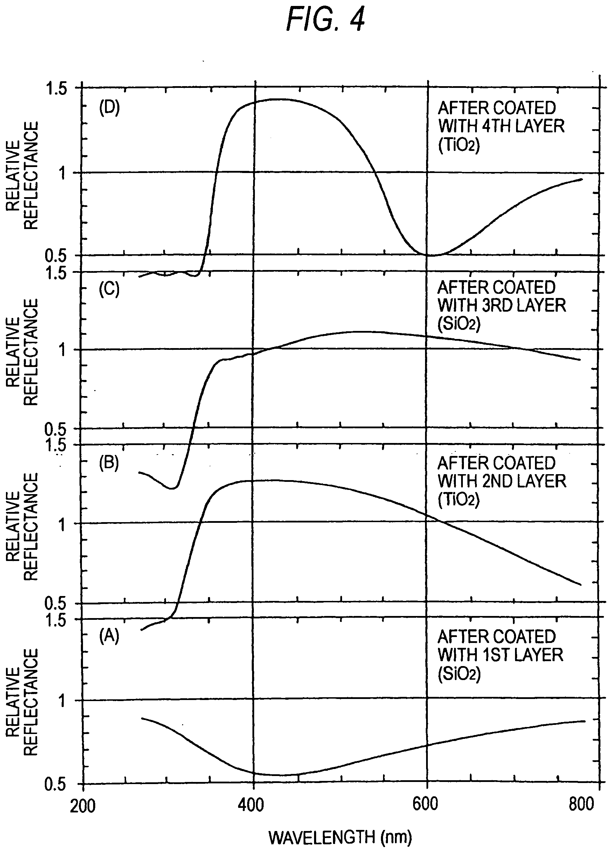

From the relational curve of the measured data of film thickness ($d_M$) vs the optical film thickness (nd) shown in Fig. 2, obtained was the optical film thickness that corresponds to the calculated film thickness (60.3 nm) of the first layer $SiO_2$ film obtained according to the equations (1) and (2), and the thus-obtained optical film thickness value was substituted for $n_j d_j$ in the equation (1) to obtain the calculated data of the spectral curve (A) in Fig. 4, and the λ value (420 nm) to give a reflection valley was obtained. The first layer $SiO_2$ film was actually formed so that its reflection valley could appear at the thus-obtained λ value (420 nm) . The film formation of the first layer $SiO_2$ film was effected according to the metal alkoxide hydrolysis method described in International Patent Laid-Open WO96/28269, like the film-coated powder for particle size correction.

(Production of film-coated powder for particle size correction of second layer $TiO_2$ film)

Varying the film-forming reaction condition, a $TiO_2$ film was formed on the $SiO_2$ film-coated powder having the first layer $SiO_2$ film (60.3 nm) formed on the substrate particles (BASF's spherical iron powder HQ) so as to have a reflection valley at 420 nm, and three different types of samples each having a different coating film thickness were thus prepared. The $TiO_2$ film formation was effected according to the metal alkoxide hydrolysis method described in International Patent Laid-Open WO96/28269. Like the coated powder samples for particle size correction of the first layer $SiO_2$ mentioned above, each of these three types of the samples, coated powder for particle size correction of the second layer $TiO_2$ film, was cut by processing it with focused ion beams (FIB), and the actual film thickness ($d_M$) was determined by observing the cut face thereof with an electronic microscope. The data are given in Table 11 below.

Table 2

| Sample Powder | Measure Data of Film Thickness |
|---|---|
| No. 2-1 | 55.8 |
| No. 2-2 | 68.0 |
| No. 2-3 | 86.9 |
| (first layer $SiO_2$ film thickness = 60.3 nm) | |

In addition, the wavelength at which each of the' above-mentioned three samples, coated powder for particle size correction of the second layer $TiO_2$ film, has a maximum reflectance was measured with a spectrophotometer, and the maximum reflectance wavelength was divided by 4 to give an optical film thickness (nd) of the layer

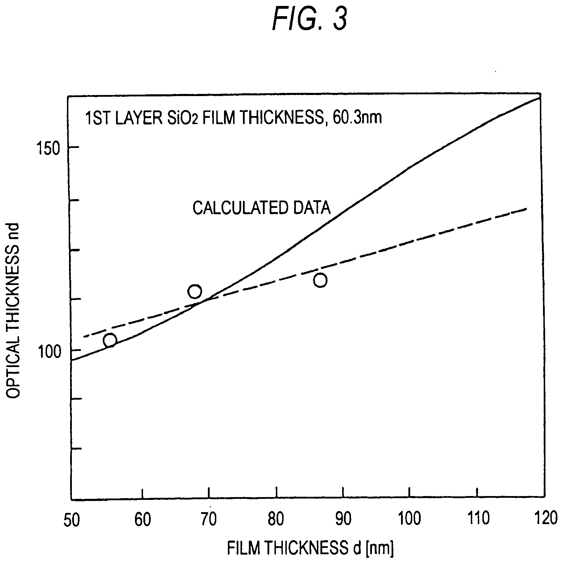

Fig. 3 shows a relational curve (dotted line) of the measured data of film thickness ($d_M$) vs the optical film thickness (nd) of the three samples, coated powder for particle size correction of the second layer $TiO_2$ film. In this, the full line indicates the calculated data of the measured film thickness ($d_M$) vs the optical film thickness (nd) obtained according to the above-mentioned equations (1) and (2).

(Correction of spectral characteristics corresponding to the calculated data of film thickness of the second layer $TiO_2$ film, and film formation)

From the relational curve of the measured data of film thickness ($d_M$) vs the optical film thickness (nd) shown in Fig. 3, obtained was the optical film thickness that corresponds to the calculated film thickness (49.2 nm) of the second layer $TiO_2$ film obtained according to the equations (1) and (2), and the thus-obtained optical film thickness value was substituted for $n_j d_j$ in the equation (1) to obtain the calculated data of the spectral curve (B) in Fig. 4, and the λ value (400 nm) to give a reflection peak was obtained. The second layer $TiO_2$ film was actually formed so that its reflection peak could appear at the thus-obtained λ value (400 nm). The film formation of the second layer $TiO_2$ film was effected according to the metal alkoxide hydrolysis method described in International Patent Laid-Open WO96/28269, like the first layer $SiO_2$ film.

(Production of film-coated powder for particle size correction of third layer $SiO_2$ film and fourth layer $TiO_2$ film, and correction of spectral characteristics corresponding to the calculated data of film thickness)

Like those for the first layer $SiO_2$ film and the second layer $TiO_2$ film, coated powders for particle size correction were formed for the third layer $SiO_2$ film and the fourth layer $TiO_2$ film, and the spectral characteristics of the layers were corrected in correspondence to the calculated data of the film thickness, and the films of these layers were actually formed.

However, since the relationship between the measured data of film thickness ($d_M$) and the optical film thickness (nd) of the third layer $SiO_2$ film and the fourth layer $TiO_2$ film were extremely close to the calculated data that were obtained according to the above-mentioned equations (1) and (2), the correction of the spectral characteristics corresponding to the calculated data of film thickness was substantially unnecessary. This would be because the curvature of the outer coating films is smaller and the coating films may be close to flat films.

Fig. 4 (C) and (D) show the calculated data of the spectral curve of the third layer $SiO_2$ film and the fourth layer $TiO_2$ film.

The film formation of the third layer $SiO_2$ film and the fourth layer $TiO_2$ film was effected according to the metal alkoxide hydrolysis method described in International Patent Laid-Open WO96/28269, like that of the first layer $SiO_2$ film and the second layer $TiO_2$ film.

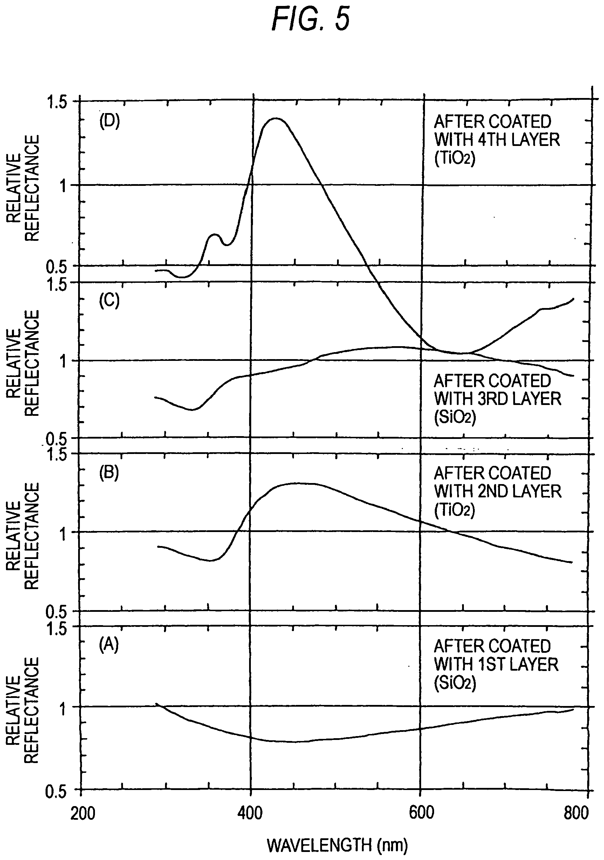

The $SiO_2$-$TiO_2$ alternate four-layer film-coated powder obtained in this Example was vivid blue powder. The actual spectral curves of the powder particles coated with each layer are shown in Fig. 5. After the formation of the fourth layer $TiO_2$ film, a reflection peak of a relative reflectance of 1.45 appeared at 430nm. This was higher than the relative reflectance (1.31) of the reflection peak that appeared at 430 nm after the formation of the second layer $TiO_2$ film.

The relative reflectance is a value obtained by dividing the reflectance of the coated particles by the reflectance of the substrate particles.

Comparative Example 1 (Film thickness planning based on multi-layer film-coated flat substrate)

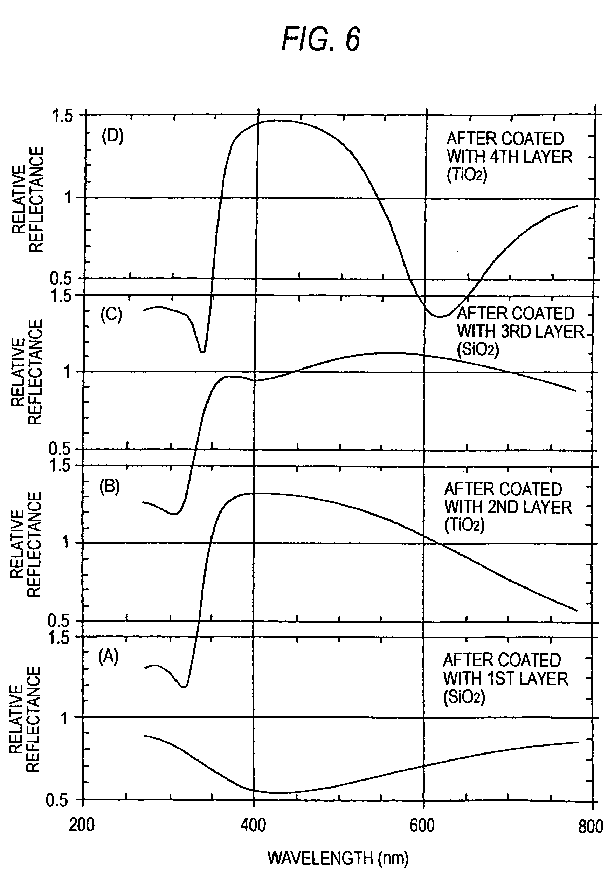

Based on the substrate particles (BASF's spherical iron powder HQ) and the coating layer structure selected in Example 10 as above, the equation (1) was solved to obtain the calculated data of the film thickness and the spectral curve of each coating layer so that the $R_{flat}$ value at 430 nm could be the maximum reflection intensity. The calculated data of the film thickness of each coating layer were as follows: The first layer $SiO_2$ film was 54.5 nm; the second layer $TiO_2$ film was 46.0 nm; the third layer $SiO_2$ film was 63.3 nm; and the fourth layer $TiO_2$ film was 47 . 5 nm. The calculated data of the relative reflectance of each coating layer were as in Fig. 6.

The coating layers were formed so that each could have the reflection valley or peak as in Fig. 6. These were formed according to the metal alkoxide hydrolysis method described in International Patent Laid-Open WO96/28269, like those in Example 1.

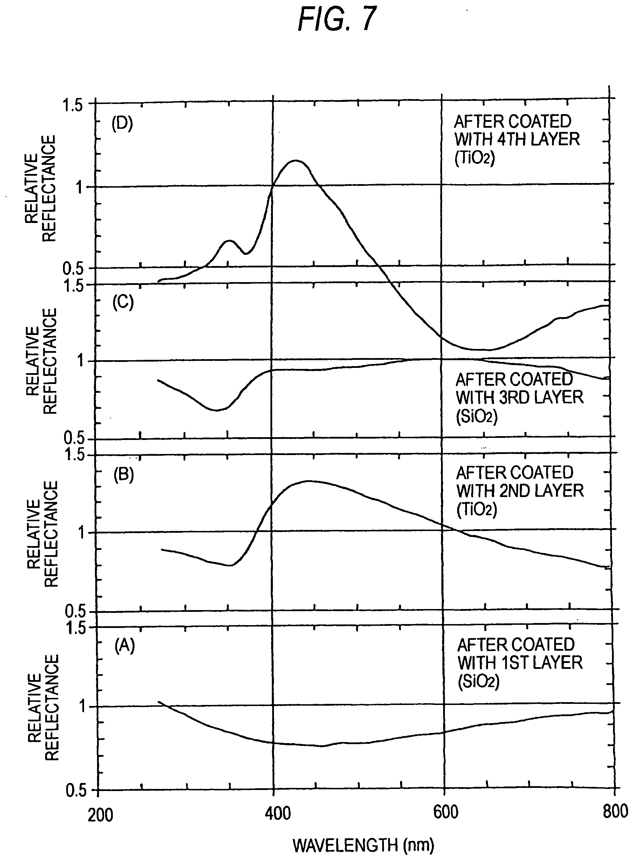

Fig. 7 shows the actual spectral curve of each layer on the $SiO_2$-$TiO_2$ alternate 4-layer coated particles formed according to the film thickness planning based on the multi-layer film-coated flat substrate as above. As a result, the relative reflectance of the reflection peak at 430 nm after the formation of the fourth layer $TiO_2$ film was 1.33; and this is the same as the relative reflectance (1.33) of the reflection peak at 430 nm after the formation of the second layer $TiO_2$ film. This means that the increase in the number of the coating layers did not result in the increase in the relative reflectance of the coating layers.

Comparative Example 2 (System without correction of spectral characteristics of coating films)

In Example 10, the coated powders for particle size correction were not prepared and the correction of the spectral characteristics corresponding to the calculated data of film thickness was not effected. Except for it, the same process as in Example 1 was repeated, in which coating layers were formed so that they could show the reflection valley or peak as in Fig. 1, and $SiO_2$-$TiO_2$ alternate four-layer coated powder was produced. As a result, the relative reflectance of the reflection peak at 430 nm of the thus-obtained powder was 1.248 and was smaller than that (relative reflectance, 1.45) of the powder obtained in Example 1.

On the other hand, coating films having the calculated data of film thickness as in Comparative Example 1 were formed on a flat substrate of the same material as that of the substrate particles (BASF' s spherical iron powder HQ) used herein to give an $SiO_2$-$TiO_2$ alternate four-layer coated flat sheet, and its relative reflectance at 430 nm was 1.255.

Accordingly, it is understood that the relative reflectance of the $SiO_2$-$TiO_2$ alternate four-layer coated powder formed in Example 1 without the preparation of the coated powders for particle size correction and without the correction of the spectral characteristics in correspondence to the calculated data of film thickness was smaller than that of the multi-layer coated flat sheet produced by forming the coating film of the same structure on the substrate of the same material as the former.

INDUSTRIAL APPLICABILITY

The film-coated powders, the coating compositions and the coated materials of the invention are specifically so designed that the number of the coating layers therein is preferably at least two or more and the thickness of each layer is increased based on the technique intrinsic thereto so as to ensure the spectrometric properties in that the reflectance at the peak in the reflection spectrum is increased and the ratio of the peak height (H) to the half-value width (W), H/W falls within a specific range as above. Accordingly, they give off beautiful colors having a high color saturation, and have a vivid color shift (color change) effect, and as having the advantageous applicability, they make it possible to enlarge the range of coloration possibility.

In addition, the powers of the invention in which each coating layer is suitably planned in point of its thickness so as to increase the reflection intensity thereof to a specific wavelength light and which has a specific film thickness accurately give off various types of more vivid colors having a higher color saturation and a larger color shift than those given by conventional powders.

The powders of the invention are useful in various industrial fields of, for example, automobile coating, decoration coating, plastic pigment coloring, as well as coating compositions, printing inks and others.

The film-coated powders, the coating compositions and the coated materials of the invention are extremely useful in producing secrete documents for forgery prevention, including, for example, bank notes, checks, check cards, credit cards, revenue stamps, postage stamps, railroad and air tickets, telephone cards, public lottery tickets, gift tickets, passports and identification cards.

**Claims**

1. A multi-layer film-coated powder, which comprises at least two coating layers having a different refractive index on the substrate particles thereof and which reflects light having a specific wavelength,
   wherein the thickness of each layer of the coating film is so designed that the reflection intensity R ($\lambda$) of the multi-layer film-coated powder, as corrected in point of the shape and the particle size thereof from the reflection intensity $R_{flat}$ of the multi-layer film of the corresponding multi-layer film-coated flat specifically selected in point of the material of the substrate particles, the number of the coating layers, the coating order of the coating layers, the material of the coating layers and the desired reflected light wavelength, may be the maximum value or the minimum value at a desired wavelength,
   wherein the substrate particles are one of iron, nickel, chromium, titanium, aluminium, a ferromagnetic alloy, oxides of the aforementioned metals, silicon oxide, calcium oxide, magnesium oxide, barium oxide, composite oxides, metal nitrides, metal carbides, metal sulfides, metal fluorides, metal carbonates, metal phosphates, semi-metal oxides, semi-metal carbides, semi-metal nitrides, non-metal oxides, non-metal carbides, non-metal nitrides, silica, glass beads, silicon balloons, fine carbon hollow balloons Kurekasphere, fused alumina bubbles, aerosol, white carbon, silica fine hollow balloons, calcium carbonate fine hollow balloons, calcium carbonate, pearlite, talc, bentonite, synthetic mica, white mica, kaolin, cellulose powder, cellulose acetate powder, spherical or ground particles of polyamides, epoxy resins, polyesters, melamine resins, polyurethanes, polyvinyl acetate resins, silicon resins, polymers or copolymers of acrylates, methacrylates, styrene, ethylene, propylene, spherical acrylic resin particles obtained through polymerization of acrylic acid or methacrylate;
   wherein the spectrophotometric characteristics of the multi-layer film-coated powder are such that when the ratio of the length at 400nm between 380nm and 780nm on measuring the reflection spectrum from the vertical reflection light of the multi-layer film-coated powder (wavelength definition width L) to the height of the reflectance 100% in the vertical axis (reflectance definition width R), L/R is 5/2, then the ratio of the peak height (H) to the half-value width (W), H/W is at least 1.

2. The multi-layer film-coated powder according to claim 1, wherein the thickness of each layer of the coating film is so designed that the R ($\lambda$) value may be the maximum value or the minimum value at a desired wavelength when the matters based on the material of the substrate particles, the number of the coating layers, the coating order of the coating layers, the material of the coating layers and the desired reflected light wavelength all specifically selected herein are introduced into the following recurrence formula (1) to give the multi-layer film reflection intensity,

$$R_{j+1,j} = \frac{r_{j+1,j} + R_{j,j-1} \exp(-2i\delta_j)}{1 + r_{j+1,j}R_{j,j-1} \exp(-2i\delta_j)}$$

(1)

$$2\delta_j = \frac{4\pi}{\lambda} n_j d_j \cos\phi_j$$

wherein $R_{j+1,j}$ indicates the amplitude reflection intensity between the j-th layer from the bottom and the layer just above it;

j indicates an integer of 1 or more (j - 1 = 0 indicates the substrate);

i indicates an imaginary unit;

$r_{j+i,j}$ indicates the Fresnel reflectance coefficient of the interface between the j-th layer from the bottom and the layer just above it;

$R_{j, j-1}$ indicates the amplitude reflection intensity between the (j-1)th layer from the bottom and the layer just above it;

$2\delta_j$ indicates the phase difference at the j-th layer from the bottom,

$\lambda$ indicates the desired reflected light wavelength;

$n_j$ indicates the refractive index of the j-th layer from the bottom;

$d_j$ indicates the thickness of the j-th layer from the bottom;

$\Phi j$ indicates the light incident angle into the j-th layer from the bottom,

and the resulting $R_{flat}$ value is further applied to the following equation (2):

$$R(\lambda) = \int_0^{\frac{\pi}{2}} \sin 2\theta \cdot R_{flat}(\lambda, \theta) \cdot d\theta \qquad (2)$$

wherein $\theta$ indicates the incident angle into the outermost layer, to thereby take the shape-dependent correction of the value into consideration for the film thickness.

3. The multi-layer film-coated powder according to claim 1, wherein the thickness of each layer of the coating film is determined by coating the selected substrate particles with the selected multiple coating layers with stepwise varying the thickness of the layers in some types to give a film-coated powder for particle size correction, then measuring the actual film thickness ($d_M$) of each coating layer of the film-coated powder, analyzing the film-coated powder with a spectrometer to obtain the optical film thickness (nd) of each coating layer of the film-coated powder, computing the ratio, $nd/nd_M$, of the optical thickness (nd) of each coating layer to the product ($nd_M$) of the actually-measured film thickness of each coating layer of the film-coated powder and the refractive index thereof (n), and multiplying the ratio $nd/nd_M$ by $2\delta_j$ in the following recurrence formula (1) to give the multi-layer film reflection intensity,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$(1)$$

$$2\delta_j = \frac{4\pi}{\lambda}n_j d_j \cos\phi_j$$

wherein $R_{j+1,j}$ indicates the amplitude reflection intensity between the j-th layer from the bottom and the layer just above it;

j indicates an integer of 1 or more (j - 1 = 0 indicates the substrate);

i indicates an imaginary unit;

$r_{j+1,j}$ indicates the Fresnel reflectance coefficient of the interface between the j-th layer from the bottom and the layer just above it;

$R_{j,\,j-1}$ indicates the amplitude reflection intensity between the (j-1)th layer from the bottom and the layer just above it;

$2\delta_j$ indicates the phase difference at the j-th layer from the bottom,

$\lambda$ indicates the desired reflected light wavelength;

$n_j$ indicates the refractive index of the j-th layer from the bottom;

$d_j$ indicates the thickness of the j-th layer from the bottom;

$\Phi_j$ indicates the light incident angle into the j-th layer from the bottom,

to obtain the intended film thickness as corrected in point of the spectral characteristics of the multi-layer film-coated powder.

4. The multi-layer film-coated powder according to claim 3, wherein the measurement the actual film thickness ($d_M$) of each coating layer of the film-coated powder for particle size correction is attained by cutting each particle of the powder and analyzing the cut face thereof.

5. The multi-layer film-coated powder according to claim 4, wherein the film-coated particles for particle size correction are cut by processing them with focused ion beams.

6. A method for producing a multi-layer film-coated powder, which comprises at least two coating layers having a different refractive index on the substrate particles thereof and which reflects light having a specific wavelength, wherein the thickness of each layer of the coating film is so determined that the reflection intensity R ($\lambda$) of the multi-layer film-coated powder, as corrected in point of the shape and the particle size thereof from the reflection intensity $R_{flat}$ of the multi-layer film of the corresponding multi-layer film-coated flat specifically selected in point of the material of the substrate particles, the number of the coating layers, the coating order of the coating layers, the material of the coating layers and the desired reflected light wavelength, may be the maximum value or the minimum value at a desired wavelength, and the intended powder is produced so that it may have the thus-determined film thickness, wherein the substrate particles are one of iron, nickel, chromium, titanium, aluminium, a ferromagnetic alloy, oxides of the aforementioned metals, silicon oxide, calcium oxide, magnesium oxide, barium oxide, composite oxides, metal nitrides, metal carbides, metal sulfides, metal fluorides, metal carbonates, metal phosphates, semi-metal oxides, semi-metal carbides, semi-metal nitrides, non-metal oxides, non-metal carbides, non-metal nitrides, silica, glass beads, silicon balloons, fine carbon hollow balloons Kurekasphere, fused alumina bubbles, aerosol, white carbon, silica fine hollow balloons, calcium carbonate fine hollow balloons, calcium carbonate, pearlite, talc, bentonite, synthetic mica, white mica, kaolin, cellulose powder, cellulose acetate powder, spherical or ground particles of polyamides, epoxy resins, polyesters, melamine resins, polyurethanes, polyvinyl acetate resins, silicon resins, polymers or copolymers of acrylates, methacrylates, styrene, ethylene, propylene, spherical acrylic resin particles obtained through polymerization of acrylic acid or methacrylate; wherein the spectrophotometric characteristics of the multi-layer film-coated powder are such that when the ratio of the length at 400nm between 380nm and 780nm on measuring the reflection spectrum from the vertical reflection light of the multi-layer film-coated powder (wavelength definition width L) to the height of the reflectance 100% in the vertical axis (reflectance definition width R), L/R is 5/2, then the ratio of the peak height (H) to the half-value width (W), H/W is at least 1.

7. The method for producing a multi-layer film-coated powder according to claim 6, wherein the thickness of each layer of the coating film is so designed that the R ($\lambda$) value may be the maximum value or the minimum value at a desired wavelength when the matters based on the material of the substrate particles, the number of the coating layers, the coating order of the coating layers, the material of the coating layers and the desired reflected light wavelength all specifically selected herein are introduced into the following recurrence formula (1) to give the multi-layer film reflection intensity,

$$R_{j+1,j} = \frac{r_{j+1,j} + R_{j,j-1} \exp(-2i\delta_j)}{1 + r_{j+1,j} R_{j,j-1} \exp(-2i\delta_j)}$$

$$2\delta_j = \frac{4\pi}{\lambda} n_j d_j \cos\phi_j$$

$$(1)$$

wherein $R_{j+1,j}$ indicates the amplitude reflection intensity between the j-th layer from the bottom and the layer just above it;
j indicates an integer of 1 or more (j - 1 = 0 indicates the substrate);
i indicates an imaginary unit;
$r_{j+1,j}$ indicates the Fresnel reflectance coefficient of the interface between the j-th layer from the bottom and the layer just above it;
$R_{j, j-1}$ indicates the amplitude reflection intensity between the (j-1)th layer from the bottom and the layer just above it;
$2\delta_j$ indicates the phase difference at the j-th layer from the bottom,
$\lambda$ indicates the desired reflected light wavelength;
$n_j$ indicates the refractive index of the j-th layer from the bottom;
$d_j$ indicates the thickness of the j-th layer from the bottom;
$\Phi j$ indicates the light incident angle into the j-th layer from the bottom,
and the resulting $R_{flat}$ value is further applied to the following equation (2):

$$R(\lambda) = \int_0^{\frac{\pi}{2}} \sin 2\theta \cdot R_{flat}(\lambda, \theta) \cdot d\theta$$

wherein $\theta$ indicates the incident angle into the outermost layer, to thereby attain the shape-dependent correction of the value for the film thickness.

8. The method for producing a multi-layer film-coated powder according to claim 6, wherein the thickness of each layer of the coating film is determined by coating the selected substrate particles with the selected multiple coating layers with stepwise varying the thickness of the layers in some types to give a film-coated powder for particle size correction, then measuring the actual film thickness ($d_M$) of each coating layer of the film-coated powder, analyzing the film-coated powder with a spectrometer to obtain the optical film thickness (nd) of each coating layer of the film-coated powder, computing the ratio, $nd/nd_M$, of the optical thickness (nd) of each coating layer to the product ($nd_M$) of the actually-measured film thickness of each coating layer of the film-coated powder and the refractive index thereof (n), and multiplying the ratio $nd/nd_M$ by $2\delta_j$ in the following recurrence formula (1) to give the multi-layer film reflection intensity,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

(1)

wherein $R_{j+1,j}$ indicates the amplitude reflection intensity between the j-th layer from the bottom and the layer just above it;

j indicates an integer of 1 or more (j - 1 = 0 indicates the substrate);

i indicates an imaginary unit;

$r_{j+1,j}$ indicates the Fresnel reflectance coefficient of the interface between the j-th layer from the bottom and the layer just above it;

$R_{j,\,j-1}$ indicates the amplitude reflection intensity between the (j-1)th layer from the bottom and the layer just above it;

$2\delta_j$ indicates the phase difference at the j-th layer from the bottom,

$\lambda$ indicates the desired reflected light wavelength;

$n_j$ indicates the refractive index of the j-th layer from the bottom;

$d_j$ indicates the thickness of the j-th layer from the bottom;

$\Phi j$ indicates the light incident angle into the j-th layer from the bottom,

to correct the spectral characteristics of the powder having the coating layers for the substrate particle size-dependent correction of the value for the film thickness, and forming the coating layers so that they may have the thus-corrected spectral characteristics.

**9.** The method for producing a multi-layer film-coated powder according to claim 8, wherein the measurement the actual film thickness ($d_M$) of each coating layer of the film-coated powder for particle size correction is attained by cutting each particle of the powder and analyzing the cut face thereof.

**10.** The method for producing a multi-layer film-coated powder according to claim 9, wherein the film-coated particles for particle size correction are cut by processing them with focused ion beams.

**Patentansprüche**

**1.** Mehrschichtiges filmbeschichtetes Pulver, das wenigstens zwei Beschichtungsschichten mit einem unterschiedlichen Brechungsindex auf den Substratteilchen davon umfasst und das Licht mit einer bestimmten Wellenlänge reflektiert,

wobei die Dicke jeder Schicht des Beschichtungsfilms so ausgelegt ist, dass die Reflexionsintensität R(λ) des mehrschichtigen filmbeschichteten Pulvers, wie hinsichtlich seiner Form und der Partikelgröße von der Reflexionsintensität $R_{flat}$ des mehrschichtigen Films der entsprechenden mehrschichtigen filmbeschichteten Fläche korrigiert, die hinsichtlich des Materials der Substratpartikel, der Anzahl der Beschichtungsschichten, der Beschichtungsreihenfolge der Beschichtungsschichten, des Materials der Beschichtungsschichten und der gewünschten Wellenlänge des reflektierten Lichts spezifisch gewählt ist, der Maximalwert oder der Minimalwert bei einer gewünschten Wellenlänge sein kann,

wobei die Substratteilchen eines von Eisen, Nickel, Chrom, Titan, Aluminium, einer ferromagnetischen Legierung, Oxiden der vorgenannten Metalle, Siliziumoxid, Kalziumoxid, Magnesiumoxid, Bariumoxid, Mischoxiden, Metallnitriden, Metallcarbiden, Metallsulfiden, Metallfluoriden, Metallkarbonaten, Metallphosphaten, Halbmetalloxiden, Halbmetallkarbiden, Halbmetallnitriden, Nichtmetalloxiden, Nichtmetallkarbiden, Nichtmetallnitriden, Siliziumdioxid, Glaskügelchen, Siliziumhohlkörpern, feinen Kohlenstoff-Hohlkörpern Kurekasphere, geschmolzenen Aluminiumoxidblasen, Aerosol, Weißkohle, feinen Siliziumdioxid-Hohlkörpern, feinen Kalziumkarbonat-Hohlkörpern, Kalziumkarbonat, Perlit, Talkum, Bentonit, synthetischem Glimmer, Weißglimmer, Kaolin, Zellulosepulver, Zelluloseacetatpulver, kugelförmigen oder gemahlenen Partikeln aus Polyamiden, Epoxidharzen, Polyesteren, Melaminharzen, Polyurethanen, Polyvinylacetatharzen, Siliziumharzen, Polymeren oder Copolymeren von Acrylaten, Methacrylaten, Styrol, Ethylen, Propylen oder kugelförmigen Acrylharzteilchen sind, die man durch Polymerisation von Acrylsäure oder Methacrylat erhält;

wobei die spektrophotometrischen Eigenschaften des mehrschichtigen filmbeschichteten Pulvers derart beschaffen sind, dass, wenn das Verhältnis der Länge bei 400 nm zwischen 380 nm und 780 nm bei der Messung des Reflexionsspektrums von dem vertikalen Reflexionslicht des mehrschichtigen filmbeschichteten Pulvers (Wellenlängen-Definitionsbreite L) zu der Höhe des Reflexionsgrades 100% in der vertikalen Achse (Reflexionsgrad-Definitionsbreite R), L/R 5/2 ist, das Verhältnis der Spitzenhöhe (H) zu der Halbwertsbreite (W), H/W wenigstens 1 ist.

2. Mehrschichtiges filmbeschichtetes Pulver nach Anspruch 1, bei dem die Dicke jeder Schicht des Beschichtungsfilms so ausgelegt ist, dass der $R(\lambda)$-Wert der Maximalwert oder der Minimalwert bei einer gewünschten Wellenlänge sein kann, wenn die Gegenstände, basierend auf dem Material der Substratteilchen, der Anzahl der Beschichtungsschichten, der Beschichtungsreihenfolge der Beschichtungsschichten, dem Material der Beschichtungsschichten und der gewünschten Wellenlänge des reflektierten Lichts, die hier sämtlich spezifisch ausgewählt sind, in die folgende Rekursionsformel (1) eingeführt werden, um die Reflexionsintensität des Mehrschichtfilms zu ergeben,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

$$(1)$$

wobei $R_{j+1,j}$ die Amplitudenreflexionsintensität zwischen der j-ten Schicht von der Unterseite und der Schicht direkt darüber bezeichnet;

j eine ganze Zahl von 1 oder mehr bezeichnet (j - 1 = 0 bezeichnet das Substrat);

i eine imaginäre Einheit bezeichnet;

$r_{j+1,j}$ den Fresnel-Reflexionskoeffizienten der Schnittstelle zwischen der j-ten Schicht von unten und der unmittelbar darüber liegenden Schicht angibt;

$R_{j, j-1}$ die Amplitudenreflexionsintensität zwischen der (j-1)-ten Schicht von unten und der unmittelbar darüber liegenden Schicht angibt;

$2\delta_j$ die Phasendifferenz an der j-ten Schicht von unten bezeichnet;

$\lambda$ die gewünschte reflektierte Lichtwellenlänge kennzeichnet;

$n_j$ den Brechungsindex der j-ten Schicht von unten angibt;

$d_j$ die Dicke der j-ten Schicht von unten ist; und

$\Phi_j$ den Lichteinfallswinkel in die j-te Schicht von unten angibt,

und der daraus resultierende Wert $R_{flat}$ weiterhin auf die folgende Gleichung (2) angewendet wird:

$$R(\lambda) = \int_0^{\frac{\pi}{2}} \sin 2\theta \cdot R_{flat}(\lambda,\theta) \cdot d\theta$$

$$(2)$$

wobei $\theta$ den Einfallswinkel in die äußerste Schicht angibt, um dadurch die formabhängige Korrektur des Wertes für die Schichtdicke zu berücksichtigen.

3. Mehrschichtiges filmbeschichtetes Pulver nach Anspruch 1, bei dem die Dicke jeder Schicht des Beschichtungsfilms bestimmt wird, indem die ausgewählten Substratteilchen mit den ausgewählten mehrfachen Beschichtungsschichten beschichtet werden, wobei die Dicke der Schichten bei einigen Typen schrittweise variiert wird, um ein filmbeschichtetes Pulver zur Korrektur der Teilchengröße zu erhalten, worauf anschließend die tatsächliche Filmdicke ($d_M$) jeder Beschichtungsschicht des filmbeschichteten Pulvers gemessen wird, das filmbeschichtete Pulver mit einem Spektrometer analysiert wird, um die optische Filmdicke (nd) jeder Beschichtungsschicht des filmbeschichteten Pulvers zu erhalten, das Verhältnis $nd/nd_M$ der optischen Dicke (nd) jeder Beschichtungsschicht zum Produkt ($nd_M$) der tatsächlich gemessenen Filmdicke jeder Beschichtungsschicht des filmbeschichteten Pulvers und deren Brechungsindex (n) berechnet wird, und

das Verhältnis nd/nd$_M$ mit 2δ$_i$ in der folgenden Rekursionsformel (1) multipliziert wird, um die Reflexionsintensität des Mehrschichtfilms zu ermitteln,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

(1)

wobei $R_{j+1,j}$ die Amplitudenreflexionsintensität zwischen der j-ten Schicht von der Unterseite und der Schicht direkt darüber bezeichnet;

j eine ganze Zahl von 1 oder mehr bezeichnet (j - 1 = 0 bezeichnet das Substrat);

i eine imaginäre Einheit bezeichnet;

$r_{j+1,j}$ den Fresnel-Reflexionskoeffizienten der Schnittstelle zwischen der j-ten Schicht von unten und der unmittelbar darüber liegenden Schicht angibt;

$R_{j, j-1}$ die Amplitudenreflexionsintensität zwischen der (j-1)-ten Schicht von unten und der unmittelbar darüber liegenden Schicht angibt;

2δ$_i$ die Phasendifferenz an der j-ten Schicht von unten bezeichnet;

λ die gewünschte reflektierte Lichtwellenlänge kennzeichnet;

$n_j$ den Brechungsindex der j-ten Schicht von unten angibt;

$d_j$ die Dicke der j-ten Schicht von unten ist; und

Φ$_j$ den Lichteinfallswinkel in die j-te Schicht von unten angibt,

um die beabsichtigte Filmdicke, wie sie hinsichtlich der Spektralcharakteristiken des mehrschichtigen filmbeschichteten Pulvers korrigiert ist, zu erhalten.

4. Mehrschichtiges filmbeschichtetes Pulver nach Anspruch 3, bei dem die Messung der tatsächlichen Filmdicke (d$_M$) jeder Beschichtungsschicht des filmbeschichteten Pulvers zur Korrektur der Teilchengröße durch Schneiden jedes Teilchens des Pulvers und Analysieren der Schnittfläche desselben erreicht wird.

5. Mehrschichtiges filmbeschichtetes Pulver nach Anspruch 4, bei dem die filmbeschichteten Teilchen zur Teilchengrößenkorrektur durch deren Verarbeitung mit fokussierten Ionenstrahlen geschnitten werden.

6. Verfahren zur Herstellung eines mehrschichtigen filmbeschichteten Pulvers, das wenigstens zwei Beschichtungsschichten mit einem unterschiedlichen Brechungsindex auf den Substratteilchen davon umfasst und das Licht mit einer bestimmten Wellenlänge reflektiert,

wobei die Dicke jeder Schicht des Beschichtungsfilms so bestimmt wird, dass die Reflexionsintensität R(λ) des mehrschichtigen filmbeschichteten Pulvers, wie hinsichtlich seiner Form und der Partikelgröße von der Reflexionsintensität R$_{flat}$ des mehrschichtigen Films der entsprechenden mehrschichtigen filmbeschichteten Fläche korrigiert, die hinsichtlich des Materials der Substratpartikel, der Anzahl der Beschichtungsschichten, der Beschichtungsreihenfolge der Beschichtungsschichten, des Materials der Beschichtungsschichten und der gewünschten Wellenlänge des reflektierten Lichts spezifisch gewählt ist, der Maximalwert oder der Minimalwert bei einer gewünschten Wellenlänge sein kann, und das beabsichtigte Pulver derart hergestellt wird, dass es die auf diese Weise bestimmte Filmdicke hat,

wobei die Substratteilchen eines von Eisen, Nickel, Chrom, Titan, Aluminium, einer ferromagnetischen Legierung, Oxiden der vorgenannten Metalle, Siliziumoxid, Kalziumoxid, Magnesiumoxid, Bariumoxid, Mischoxiden, Metallnitriden, Metallcarbiden, Metallsulfiden, Metallfluoriden, Metallkarbonaten, Metallphosphaten, Halbmetalloxiden, Halbmetallkarbiden, Halbmetallnitriden, Nichtmetalloxiden, Nichtmetallkarbiden, Nichtmetallnitriden, Siliziumdioxid, Glaskügelchen, Siliziumhohlkörpern, feinen Kohlenstoff-Hohlkörpern Kurekasphere, geschmolzenen Aluminiumoxidblasen, Aerosol, Weißkohle, feinen Siliziumdioxid-Hohlkörpern, feinen Kalziumkarbonat-Hohlkörpern, Kalziumkarbonat, Perlit, Talkum, Bentonit, synthetischem Glimmer, Weißglimmer, Kaolin, Zellulosepulver, Zelluloseacetatpulver, kugelförmigen oder gemahlenen Partikeln aus Polyamiden, Epoxidharzen, Polyestern, Melaminharzen,

Polyurethanen, Polyvinylacetatharzen, Siliziumharzen, Polymeren oder Copolymeren von Acrylaten, Methacrylaten, Styrol, Ethylen, Propylen oder kugelförmigen Acrylharzteilchen sind, die man durch Polymerisation von Acrylsäure oder Methacrylat erhält;

wobei die spektrophotometrischen Eigenschaften des mehrschichtigen filmbeschichteten Pulvers derart beschaffen sind, dass, wenn das Verhältnis der Länge bei 400 nm zwischen 380 nm und 780 nm bei der Messung des Reflexionsspektrums von dem vertikalen Reflexionslicht des mehrschichtigen filmbeschichteten Pulvers (Wellenlängen-Definitionsbreite L) zu der Höhe des Reflexionsgrades 100% in der vertikalen Achse (Reflexionsgrad-Definitionsbreite R), L/R 5/2 ist, das Verhältnis der Spitzenhöhe (H) zu der Halbwertsbreite (W), H/W wenigstens 1 ist.

7.  Verfahren zur Herstellung eines mehrschichtigen, filmbeschichteten Pulvers nach Anspruch 6, bei dem die Dicke jeder Schicht des Beschichtungsfilms so ausgelegt ist, dass der $P(\lambda)$-Wert der Maximalwert oder der Minimalwert bei einer gewünschten Wellenlänge sein kann, wenn die Gegenstände, basierend auf dem Material der Substratteilchen, der Anzahl der Beschichtungsschichten, der Beschichtungsreihenfolge der Beschichtungsschichten, dem Material der Beschichtungsschichten und der gewünschten Wellenlänge des reflektierten Lichts, die hier sämtlich spezifisch ausgewählt sind, in die folgende Rekursionsformel (1) eingeführt werden, um die Reflexionsintensität des Mehrschichtfilms zu ergeben,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda} n_j d_j \cos\phi_j$$

$$(1)$$

wobei $R_{j+1,j}$ die Amplitudenreflexionsintensität zwischen der j-ten Schicht von der Unterseite und der Schicht direkt darüber bezeichnet;

j eine ganze Zahl von 1 oder mehr bezeichnet (j - 1 = 0 bezeichnet das Substrat); i eine imaginäre Einheit bezeichnet;

$r_{j+1,j}$ den Fresnel-Reflexionskoeffizienten der Schnittstelle zwischen der j-ten Schicht von unten und der unmittelbar darüber liegenden Schicht angibt;

$R_{j, j-1}$ die Amplitudenreflexionsintensität zwischen der (j-1)-ten Schicht von unten und der unmittelbar darüber liegenden Schicht angibt;

$2\delta_j$ die Phasendifferenz an der j-ten Schicht von unten bezeichnet;

$\lambda$ die gewünschte reflektierte Lichtwellenlänge kennzeichnet;

$n_j$ den Brechungsindex der j-ten Schicht von unten angibt;

$d_j$ die Dicke der j-ten Schicht von unten ist; und

$\Phi_j$ den Lichteinfallswinkel in die j-te Schicht von unten angibt,

und der daraus resultierende Wert $R_{flat}$ weiterhin auf die folgende Gleichung (2) angewendet wird:

$$R(\lambda) = \int_0^{\frac{\pi}{2}} \sin 2\theta \cdot R_{flat}(\lambda, \theta) \cdot d\theta$$

$$(2)$$

wobei $\theta$ den Einfallswinkel in die äußerste Schicht angibt, um dadurch die formabhängige Korrektur des Wertes für die Schichtdicke zu berücksichtigen.

8.  Verfahren zur Herstellung eines mehrschichtigen filmbeschichteten Pulvers nach Anspruch 6, bei dem die Dicke jeder Schicht des Beschichtungsfilms bestimmt wird, indem die ausgewählten Substratteilchen mit den ausgewählten mehrfachen Beschichtungsschichten beschichtet werden, wobei die Dicke der Schichten bei einigen Typen schrittweise variiert wird, um ein filmbeschichtetes Pulver zur Korrektur der Teilchengröße zu erhalten, worauf anschließend die tatsächliche Filmdicke ($d_M$) jeder Beschichtungsschicht des filmbeschichteten Pulvers gemessen wird, das filmbeschichtete Pulver mit einem Spektrometer analysiert wird, um die optische Filmdicke (nd) jeder Beschichtungsschicht des filmbeschichteten Pulvers zu erhalten, das Verhältnis nd/nd$_M$ der optischen Dicke (nd) jeder Beschichtungsschicht zum Produkt (nd$_M$) der tatsächlich gemessenen Filmdicke jeder Beschichtungsschicht des filmbeschichteten Pulvers und deren Brechungsindex (n) berechnet wird, und

das Verhältnis nd/nd$_M$ mit $2\delta_i$ in der folgenden Rekursionsformel (1) multipliziert wird, um die Reflexionsintensität des Mehrschichtfilms zu ermitteln,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

$$(1)$$

wobei $R_{j+1,j}$ die Amplitudenreflexionsintensität zwischen der j-ten Schicht von der Unterseite und der Schicht direkt darüber bezeichnet;

j eine ganze Zahl von 1 oder mehr bezeichnet (j - 1 = 0 bezeichnet das Substrat);

i eine imaginäre Einheit bezeichnet;

$r_{j+1,j}$ den Fresnel-Reflexionskoeffizienten der Schnittstelle zwischen der j-ten Schicht von unten und der unmittelbar darüber liegenden Schicht angibt;

$R_{j,\ j-1}$ die Amplitudenreflexionsintensität zwischen der (j-1)-ten Schicht von unten und der unmittelbar darüber liegenden Schicht angibt;

$2\delta_i$ die Phasendifferenz an der j-ten Schicht von unten bezeichnet;

$\lambda$ die gewünschte reflektierte Lichtwellenlänge kennzeichnet;

$n_j$ den Brechungsindex der j-ten Schicht von unten angibt;

$d_j$ die Dicke der j-ten Schicht von unten ist; und

$\Phi_j$ den Lichteinfallswinkel in die j-te Schicht von unten angibt,

um die Spektralcharakteristiken des Pulvers mit den Beschichtungsschichten für die substratpartikelgrößenabhängige Korrektur des Wertes für die Schichtdicke zu korrigieren und die Beschichtungsschichten so auszubilden, dass sie die so korrigierten Spektralcharakteristiken haben können.

9. Verfahren zur Herstellung eines mehrschichtigen filmbeschichteten Pulvers nach Anspruch 8, bei dem die Messung der tatsächlichen Filmdicke (d$_M$) jeder Beschichtungsschicht des filmbeschichteten Pulvers zur Korrektur der Teilchengröße durch Schneiden jedes Teilchens des Pulvers und Analysieren der Schnittfläche desselben erreicht wird.

10. Verfahren zur Herstellung eines mehrschichtigen filmbeschichteten Pulvers nach Anspruch 9, bei dem die filmbeschichteten Teilchen zur Teilchengrößenkorrektur durch deren Verarbeitung mit fokussierten Ionenstrahlen geschnitten werden.

## Revendications

1. Poudre revêtue de film multicouche, qui comprend au moins deux couches de revêtement ayant un indice de réfraction différent sur les particules de substrat de celle-ci et qui réfléchit de la lumière ayant une longueur d'onde spécifique,

dans laquelle l'épaisseur de chaque couche du film de revêtement est conçue de telle sorte que l'intensité de réflexion R(À) de la poudre revêtue de film multicouche, corrigée du point de vue de la forme et de la taille de particule de celle-ci à partir de l'intensité de réflexion R$_{flat}$ du film multicouche de l'aplat revêtu de fil multicouche correspondant choisi spécifiquement du point de vue du matériau des particules de substrat, de nombre des couches de revêtement, de l'ordre de revêtement des couches de revêtement, du matériau des couches de revêtement et de la longueur d'onde souhaitée de la lumière réfléchie, puisse être maximale ou minimale à une longueur d'onde souhaitée,

dans laquelle les particules de substrat sont l'un parmi le fer, du nickel, du chrome, du titane, de l'aluminium, un alliage ferromagnétique, des oxydes des métaux susmentionnés, de l'oxyde de silicium, de l'oxyde de calcium, de l'oxyde de magnésium, de l'oxyde de baryum, des oxydes composites, des nitrures métalliques, des carbures métalliques, des sulfures métalliques, des fluorures métalliques, des carbonates métalliques, des phosphates métalliques, des oxydes semi-métalliques, des carbures semi-métalliques, des nitrures semi-métalliques, des oxydes non métalliques, des carbures non métalliques, des nitrures non métalliques, de la silice, des billes de verre, des sphères en silicium, des sphères creuses fines en carbone Kurekasphere, des bulles d'alumine fondue, un aérosol, du carbone blanc, des sphères creuses fines en silice, des sphères creuses fines en carbonate de calcium, du carbonate de calcium, de la perlite, du talc, de la bentonite, du mica synthétique, du mica blanc, du kaolin, de la poudre de cellulose, de la poudre d'acétate de cellulose, des particules sphériques ou broyées de polyamides, résines époxy, polyesters, résines de mélamine, polyuréthanes, résines d'acétate polyvinyliques, résines de silicium, polymères ou copolymères d'acrylates, méthacrylates, styrène, éthylène, propylène, des particules de résine acrylique sphériques obtenues par polymérisation d'acide acrylique ou de méthacrylate ;
dans laquelle les caractéristiques spectrophotométriques de la poudre revêtue de film multicouche sont telles que quand le rapport de la longueur à 400 nm entre 380 nm et 780 nm lors de la mesure du spectre de réflexion de la lumière réfléchie verticalement par la poudre revêtue de film multicouche (largeur de définition de la longueur d'onde L) à la hauteur de la réflectance de 100 % suivant l'axe vertical (largeur de définition de la réflectance R), L/R, est égal à 5/2, alors le rapport de la hauteur de pic (H) à la largeur à mi-hauteur (W), H/W, est au moins égal à 1.

2. Poudre revêtue de film multicouche selon la revendication 1, dans laquelle l'épaisseur de chaque couche du film de revêtement est conçue de telle sorte que la valeur R(λ) puisse être la valeur maximale ou la valeur minimale à une longueur d'onde souhaitée quand les éléments basés sur le matériau des particules de substrat, le nombre de couches de revêtement, l'ordre de revêtement des couches de revêtement, le matériau des couches de revêtement et la longueur d'onde de la lumière réfléchie souhaitée, tous choisis spécifiquement ici, sont introduits dans la formule de récurrence (1) suivante pour donner l'intensité de réflexion du film multicouche,

$$R_{j+1,j} = \frac{r_{j+1,j} + R_{j,j-1} \exp(-2i\delta_j)}{1 + r_{j+1,j} R_{j,j-1} \exp(-2i\delta_j)}$$

$$2\delta_j = \frac{4\pi}{\lambda} n_j d_j \cos\phi_j$$

(1)

où $R_{j+1,j}$ désigne l'intensité de réflexion d'amplitude entre la $j^{\text{ème}}$ couche à partir du bas et la couche juste au-dessus ;
j désigne un entier supérieur ou égal à 1 (j - 1 = 0 désigne le substrat) ;
i désigne une unité imaginaire ;
$r_{j+1,j}$ désigne le coefficient de réflectance de Fresnel de l'interface entre la $j^{\text{ème}}$ couche à partir du bas et la couche juste au-dessus ;
$R_{j,j-1}$ désigne l'intensité de réflexion d'amplitude entre la $(j-1)^{\text{ème}}$ couche à partir du bas et la couche juste au-dessus ;
$2\delta_j$ désigne la différence de phase au niveau de la $j^{\text{ème}}$ couche à partir du bas,
$\lambda$ désigne la longueur d'onde de la lumière réfléchie souhaitée ;
$n_j$ désigne l'indice de réfraction de la $j^{\text{ème}}$ couche à partir du bas ;
$d_j$ désigne l'épaisseur de la $j^{\text{ème}}$ couche à partir du bas ;
$\Phi_j$ désigne l'angle d'incidence de la lumière dans la $j^{\text{ème}}$ couche à partir du bas,
et la valeur $R_{flat}$ résultante est ensuite appliquée à l'équation (2) suivante :

$$R(\lambda) = \int_0^{\frac{\pi}{2}} \sin 2\theta \cdot R_{flat}(\lambda, \theta) \cdot d\theta \quad (2)$$

où θ désigne l'angle d'incidence dans la couche la plus externe, de façon à prendre en compte la correction de la valeur en fonction de la forme pour l'épaisseur du film.

3. Poudre revêtue de film multicouche selon la revendication 1, dans laquelle l'épaisseur de chaque couche du film de revêtement est déterminée en revêtant les particules de substrat sélectionnées avec les couches de revêtement multiples sélectionnées tout en faisant varier par incréments l'épaisseur des couches dans certains types pour produire une poudre revêtue de film destinée à une correction de taille des particules, puis en mesurant l'épaisseur de film réelle ($d_M$) de chaque couche de revêtement de la poudre revêtue de film, en analysant la poudre revêtue de film avec un spectromètre pour obtenir l'épaisseur de film optique (nd) de chaque couche de revêtement de la poudre revêtue de film, en calculant le rapport, $nd/nd_M$, de l'épaisseur optique (nd) de chaque couche de revêtement au produit ($nd_M$) de l'épaisseur de film réellement mesurée de chaque couche de revêtement de la poudre revêtue de film et de son indice de réfraction (n), et en multipliant le rapport $nd/nd_M$ par $2\delta_j$ dans la formule de récurrence (1) suivante pour donner l'intensité de réflexion du film multicouche,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

(1)

où $R_{j+1,j}$ désigne l'intensité de réflexion d'amplitude entre la j$^{\text{ème}}$ couche à partir du bas et la couche juste au-dessus ;

j désigne un entier supérieur ou égal à 1 (j - 1 = 0 désigne le substrat) ;

i désigne une unité imaginaire ;

$r_{j+1,j}$ désigne le coefficient de réflectance de Fresnel de l'interface entre la j$^{\text{ème}}$ couche à partir du bas et la couche juste au-dessus ;

$R_{j,j-1}$ désigne l'intensité de réflexion d'amplitude entre la (j-1)$^{\text{ème}}$ couche à partir du bas et la couche juste au-dessus ;

$2\delta j$ désigne la différence de phase au niveau de la j$^{\text{ème}}$ couche à partir du bas,

$\lambda$ désigne la longueur d'onde de la lumière réfléchie souhaitée ;

$n_j$ désigne l'indice de réfraction de la j$^{\text{ème}}$ couche à partir du bas ;

$d_j$ désigne l'épaisseur de la j$^{\text{ème}}$ couche à partir du bas ;

$\Phi j$ désigne l'angle d'incidence de la lumière dans la j$^{\text{ème}}$ couche à partir du bas,

pour obtenir l'épaisseur de film cible corrigée du point de vue des caractéristiques spectrales de la poudre revêtue de film multicouche.

4. Poudre revêtue de film multicouche selon la revendication 3, la mesure de l'épaisseur de film réelle ($d_M$) de chaque couche de revêtement de la poudre revêtue de film pour la correction de taille de particule étant obtenue en coupant chaque particule de la poudre et en analysant la face coupée de celles-ci.

5. Poudre revêtue de film multicouche selon la revendication 4, les particules revêtues de film pour la correction de taille de particule étant coupées par traitement au moyen de faisceaux ioniques focalisés.

6. Procédé de production d'une poudre revêtue de film multicouche, qui comprend au moins deux couches de revêtement ayant un indice de réfraction différent sur des particules de substrat de celle-ci et qui reflète de la lumière ayant une longueur d'onde spécifique,

dans lequel l'épaisseur de chaque couche du film de revêtement est conçue de telle sorte que l'intensité de réflexion $R(\lambda)$ de la poudre revêtue de film multicouche, corrigée du point de vue de la forme et de la taille de particule de celle-ci à partir de l'intensité de réflexion $R_{flat}$ du film multicouche de l'aplat revêtu de fil multicouche correspondant choisi spécifiquement du point de vue du matériau des particules de substrat, de nombre des couches de revêtement, de l'ordre de revêtement des couches de revêtement, du matériau des couches de revêtement et de la longueur d'onde souhaitée de la lumière réfléchie, puisse être maximale ou minimale à une longueur d'onde souhaitée,

dans lequel les particules de substrat sont l'un parmi du fer, du nickel, du chrome, du titane, de l'aluminium, un alliage ferromagnétique, des oxydes des métaux susmentionnés, de l'oxyde de silicium, de l'oxyde de calcium, de l'oxyde de magnésium, de l'oxyde de baryum, des oxydes composites, des nitrures métalliques, des carbures métalliques, des sulfures métalliques, des fluorures métalliques, des carbonates métalliques, des phosphates métalliques, des oxydes semi-métalliques, des carbures semi-métalliques, des nitrures semi-métalliques, des oxydes non métalliques, des carbures non métalliques, des nitrures non métalliques, de la silice, des billes de verre, des sphères en silicium, des sphères creuses fines en carbone Kurekasphere, des bulles d'alumine fondue, un aérosol, du carbone blanc, des sphères creuses fines en silice, des sphères creuses fines en carbonate de calcium, du carbonate de calcium, de la perlite, du talc, de la bentonite, du mica synthétique, du mica blanc, du kaolin, de la poudre de cellulose, de la poudre d'acétate de cellulose, des particules sphériques ou broyées de polyamides, résines époxy, polyesters, résines de mélamine, polyuréthanes, résines d'acétate polyvinyliques, résines de silicium, polymères ou copolymères d'acrylates, méthacrylates, styrène, éthylène, propylène, des particules de résine acrylique sphériques obtenues par polymérisation d'acide acrylique ou de méthacrylate ;

dans lequel les caractéristiques spectrophotométriques de la poudre revêtue de film multicouche sont telles que quand le rapport de la longueur à 400 nm entre 380 nm et 780 nm lors de la mesure du spectre de réflexion de la lumière réfléchie verticalement par la poudre revêtue de film multicouche (largeur de définition de la longueur d'onde L) à la hauteur de la réflectance de 100 % suivant l'axe vertical (largeur de définition de la réflectance R), L/R, est égal à 5/2, alors le rapport de la hauteur de pic (H) à la largeur à mi-hauteur (W), H/W, est au moins égal à 1.

7. Procédé de production d'une poudre revêtue de film multicouche selon la revendication 6, dans lequel l'épaisseur de chaque couche du film de revêtement est conçue de telle sorte que la valeur $R(\lambda)$ puisse être la valeur maximale ou la valeur minimale à une longueur d'onde souhaitée quand les éléments basés sur le matériau des particules de substrat, le nombre de couches de revêtement, l'ordre de revêtement des couches de revêtement, le matériau des couches de revêtement et la longueur d'onde réfléchie souhaitée, tous choisis spécifiquement ici, sont introduits dans la formule de récurrence (1) suivante pour donner l'intensité de réflexion du film multicouche,

$$R_{j+1,j} = \frac{r_{j+1,j} + R_{j,j-1}\exp(-2i\delta_j)}{1 + r_{j+1,j}R_{j,j-1}\exp(-2i\delta_j)}$$

$$2\delta_j = \frac{4\pi}{\lambda}n_j d_j \cos\phi_j$$

(1)

où $R_{j+1,j}$ désigne l'intensité de réflexion d'amplitude entre la $j^{\text{ème}}$ couche à partir du bas et la couche juste au-dessus ;

j désigne un entier supérieur ou égal à 1 (j - 1 = 0 désigne le substrat) ;

i désigne une unité imaginaire ;

$r_{j+1,j}$ désigne le coefficient de réflectance de Fresnel de l'interface entre la $j^{\text{ème}}$ couche à partir du bas et la couche juste au-dessus ;

$R_{j,j-1}$ désigne l'intensité de réflexion d'amplitude entre la $(j-1)^{\text{ème}}$ couche à partir du bas et la couche juste au-dessus ;

$2\delta_j$ désigne la différence de phase au niveau de la $j^{\text{ème}}$ couche à partir du bas,

$\lambda$ désigne la longueur d'onde de la lumière réfléchie souhaitée ;

$n_j$ désigne l'indice de réfraction de la $j^{\text{ème}}$ couche à partir du bas ;

$d_j$ désigne l'épaisseur de la $j^{\text{ème}}$ couche à partir du bas ;

$\Phi j$ désigne l'angle d'incidence de la lumière dans la $j^{\text{ème}}$ couche à partir du bas,

et la valeur $R_{\text{flat}}$ résultante est ensuite appliquée à l'équation (2) suivante :

$$R(\lambda) = \int_0^{\frac{\pi}{2}} \sin 2\theta \cdot R_{flat}(\lambda, \theta) \cdot d\theta \qquad (2)$$

où $\theta$ désigne l'angle d'incidence dans la couche la plus externe, de façon à prendre en compte la correction de la valeur en fonction de la forme pour l'épaisseur du film.

8. Procédé de production d'une poudre revêtue de film multicouche selon la revendication 6, dans lequel l'épaisseur de chaque couche du film de revêtement est déterminée en revêtant les particules de substrat sélectionnées avec les couches de revêtement multiples sélectionnées tout en faisant varier par incréments l'épaisseur des couches dans certains types pour produire une poudre revêtue de film destinée à une correction de taille des particules, puis en mesurant l'épaisseur de film réelle ($d_M$) de chaque couche de revêtement de la poudre revêtue de film, en analysant la poudre revêtue de film avec un spectromètre pour obtenir l'épaisseur de film optique (nd) de chaque couche de la poudre revêtue de film, en calculant le rapport, nd/nd$_M$, de l'épaisseur optique (nd) de chaque couche de revêtement au produit (nd$_M$) de l'épaisseur de film réellement mesurée de chaque couche de revêtement de la poudre revêtue de film et de son indice de réfraction (n), et en multipliant le rapport nd/nd$_M$ par $2\delta_j$ dans la formule de récurrence (1) suivante pour donner l'intensité de réflexion du film multicouche,

$$R_{j+1,j} = \frac{r_{j+1,j} + R_{j,j-1}\exp(-2i\delta_j)}{1 + r_{j+1,j}R_{j,j-1}\exp(-2i\delta_j)} \qquad (1)$$

$$2\delta_j = \frac{4\pi}{\lambda}n_j d_j \cos\phi_j$$

où $R_{j+1,j}$ désigne l'intensité de réflexion d'amplitude entre la j$^{ème}$ couche à partir du bas et la couche juste au-dessus ;

j désigne un entier supérieur ou égal à 1 (j - 1 = 0 désigne le substrat) ;

i désigne une unité imaginaire ;

$r_{j+1,j}$ désigne le coefficient de réflectance de Fresnel de l'interface entre la j$^{ème}$ couche à partir du bas et la couche juste au-dessus ;

$R_{j,j-1}$ désigne l'intensité de réflexion d'amplitude entre la (j-1)$^{ème}$ couche à partir du bas et la couche juste au-dessus ;

$2\delta j$ désigne la différence de phase au niveau de la j$^{ème}$ couche à partir du bas,

$\lambda$ désigne la longueur d'onde de la lumière réfléchie souhaitée ;

$n_j$ désigne l'indice de réfraction de la j$^{ème}$ couche à partir du bas ;

$d_j$ désigne l'épaisseur de la j$^{ème}$ couche à partir du bas ;

$\Phi j$ désigne l'angle d'incidence de la lumière dans la j$^{ème}$ couche à partir du bas,

pour corriger les caractéristiques spectrales de la poudre ayant les couches de revêtement pour la correction, en fonction de la taille de particule, de la valeur de l'épaisseur de film, et en formant les couches de revêtement pour qu'elles puissent présenter les caractéristiques spectrales ainsi corrigées.

9. Procédé de production d'une poudre revêtue de film multicouche selon la revendication 8, dans lequel la mesure de l'épaisseur de film réelle ($d_M$) de chaque couche de revêtement de la poudre revêtue de film pour la correction de taille de particule est obtenue en coupant chaque particule de la poudre et en analysant la face coupée de celles-ci.

10. Procédé de production d'une poudre revêtue de film multicouche selon la revendication 9, dans lequel les particules revêtues de film pour la correction de taille de particule sont coupées par traitement au moyen de faisceaux ioniques focalisés.

## FIG. 1

FIG. 2

OPTICAL THICKNESS nd

FILM THICKNESS d [nm]

CALCULATED DATA

EP 1 484 365 B1

# FIG. 3

*1ST LAYER SiO2 FILM THICKNESS, 60.3nm*

CALCULATED DATA

OPTICAL THICKNESS nd

FILM THICKNESS d [nm]

# FIG. 4

(D) AFTER COATED WITH 4TH LAYER (TiO2)

(C) AFTER COATED WITH 3RD LAYER (SiO2)

(B) AFTER COATED WITH 2ND LAYER (TiO2)

(A) AFTER COATED WITH 1ST LAYER (SiO2)

RELATIVE REFLECTANCE

WAVELENGTH (nm)

## FIG. 5

# FIG. 6

# FIG. 7

(D) RELATIVE REFLECTANCE — AFTER COATED WITH 4TH LAYER (TiO$_2$)

(C) RELATIVE REFLECTANCE — AFTER COATED WITH 3RD LAYER (SiO$_2$)

(B) RELATIVE REFLECTANCE — AFTER COATED WITH 2ND LAYER (TiO$_2$)

(A) RELATIVE REFLECTANCE — AFTER COATED WITH 1ST LAYER (SiO$_2$)

WAVELENGTH (nm)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3271376 A
- JP 3274278 A
- JP 6228604 A
- US 3438796 A
- US 5135812 A
- DE 19618569 A
- EP 753545 A
- DE 19808657

- DE 200044834 A
- JP 2001271006 A
- EP 0852977 A1
- JP 6228640 A
- JP 7090310 A
- WO 9628269 A
- JP 11131102 A